# EUROPEAN PATENT APPLICATION

(11) **EP 1 170 955 A1**
(43) Date of publication of application: **09.01.2002**
(21) Application number: 01116451.4
(22) Date of filing: 06.07.2001
(51) Int. Cl.: H04N 7/26, H04N 7/24, H04N 7/30

(54) **Bit rate correction in a moving picture coding apparatus**

(30) Priority: 07.07.2000 JP 2000207477
(71) Applicant: Matsushita Electric Industrial Co., Ltd., Kadoma-shi, Osaka (JP)
(72) Inventor: Honda, Yoshimasa, Kamakura-shi, Kanagawa 247-0066 (JP); Komiya, Daisaku, Tokyo 166-0014 (JP); Uenoyama, Tsutomu, Kawasaki-shi, Kanagawa 210-0022 (JP)
(74) Representative: Grünecker, Kinkeldey, Stockmair & Schwanhäusser Anwaltssozietät

(57) **Abstract**

When the bit rate of the moving picture data is changed, and the moving picture data is newly produced, to quickly realize the moving picture data production without decoding the moving picture data, and without generating the image quality deterioration due to the motion compensation error. The non-compression moving picture data is an input, quantization means, and rate correction data producing means for producing the rate correction data which is the data to be used at the time of bit rate change, are provided, and the moving picture data having together the rate correction data other than the normal moving picture stream is produced. Thereby, by selecting and replacing the rate correction data whose bit amount is different in the input moving picture data, by adjusting to the objective bit rate, the bit rate is changed and the moving picture data can be quickly produced without decoding the moving picture data.

## Description

### BACKGROUND OF THE INVENTION

The present invention relates to a bit rate control method for a moving picture coding apparatus to produce the moving picture data in which the bit rate is different, from the compression coded moving picture data.

Recently, according to the development of the digital signal processing engineering, the moving picture data can be compressed and coded, and the compression coded moving picture data is easily treated. Further, with the development of a computer network, the chance to transmit and receive the compression coded moving picture data through various transmission paths is increased. For example, as a TV broadcasting station, a large amount of the moving picture data previously accumulated, is compression coded and saved, and as a VOD (Video On Demand), at the need of the user, the compression coded moving picture data can be transmitted onto the transmission path.

However, in the case where the compression coded moving picture data is transmitted onto the transmission path, there is sometimes a case where the bit rate which can be transmitted on the transmission path is different from the bit rate of the moving picture, and in the case where the bit rate of the moving picture data is large, when the moving picture is transmitted as it is, there is a problem that the delay is generated in the reception data, and the moving picture data can not be reproduced in the real time. Accordingly, in order to reproduce a moving picture in the real time, it is necessary that the bit rate of the moving picture is lowered. Further, it is necessary that the bit rate of the moving picture data is adjusted also to the bit rate at which the reception terminal equipment by which the moving picture data is received, can receive. Further, even in the case where not the whole frame in the compression coded moving picture data, but only a portion of the frame is quarried out and transmitted, when the bit rate of the quarried out moving picture data exceeds the bit rate at which the transmission path can transmit, it is necessary that the processing to lower the bit rate is conducted. As described above, when the moving picture data is transmitted through various reception terminal equipments and transmission paths, it is necessary that the bit rate of the moving picture data is changed by adjusting to various bit rates, and by a time period in which it takes for the processing of the rate control, the delay is generated in the data transmission.

Further, when the VOD server sends out a plurality of moving picture data to a plurality of terminal equipments as in the case of the VOD, in proportional to the plurality of number of terminal equipments connected to the VOD server, because the rate control processing becomes heavy, and the burden onto the VOD server becomes large, the number of terminal equipments which can be simultaneously connected, are limited. That is, the bit rate control method to quickly change the bit rate of the moving picture data is absolutely necessary.

In such the case, as the conventional technique to control the bit rate of the compression coded moving picture data, a method in which, initially, the moving picture data is decoded into the non-compression moving picture data, and coded again, and thereby the bit rate is changed, is well known. However, in this method, because the moving picture data is decoded once, and further, coded again, the burden of this processing is large, and there is a problem that it is difficult to quickly change the bit rate and produce the moving picture data.

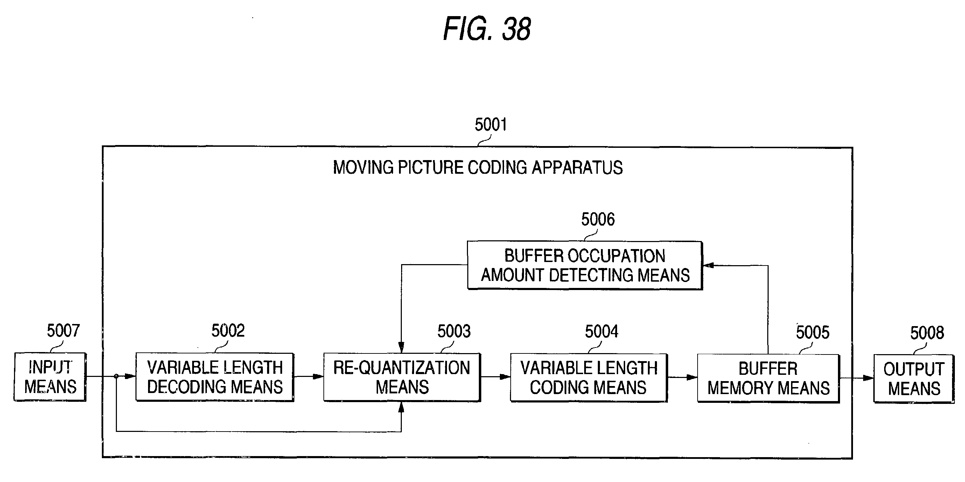

Further, as the conventional technique to lighten the re-coding processing and to increase the processing speed, a technique disclosed in JP-A-8-23539 is well known. In Fig. 38, the structure of the conventional moving picture coding apparatus is shown. In Fig. 38, a moving picture coding apparatus 5001 is structured by a variable length decoding means 5002 connected to an input means 5006, a re-quantizing means 5003, a variable coding means 5004, a buffer memory means 5005, and a buffer occupation amount detecting means 5006, and is connected to an output means 5008.

Next, an operation of the moving picture coding apparatus will be described. In Fig. 38, the input means 5007 inputs the coded moving picture data into the variable length decoding means 5002 for each one frame, and inputs the objective bit rate into the re-quantization means 5003. Then, the variable length decoding means 5002 conducts variable length decoding on the input data, and the quantized DCT (Discrete Cosine Transform) coefficient is found, and outputted to the re-quantization means 5003. Then, the re-quantization means 5003 re-quantizes the quantized DCT coefficient, and outputs it to the variable length coding means 5004. In this connection, the re-quantization means 5003 compares the bit rate inputted from the input means 5007 to the buffer occupation amount inputted from the buffer occupation amount detecting means 5006, and the quantization value is set so as to satisfy a predetermined bit rate, and the re-quantization is conducted. Herein, the quantization value means a value to divide the DCT coefficient in the quantization. Further, the variable length coding means 5004 conducts variable length coding on the re-quantized DCT coefficient, and supplies the moving picture data which is variable length coded, to the buffer memory means 5005. The buffer memory means 5005 outputs the inputted moving picture data from the variable length coding means 5004 to the output means 5008, and outputs the data amount of the moving picture data to the buffer occupation amount detecting means 5006. After the buffer occupation amount detecting means 5006 adds the data amount and detects the buffer occupation amount, the total amount of the data is outputted to the re-quantization means 5003.

As described above, when, by using the moving picture coding apparatus 5001, the bit rate is controlled from the compression coded moving picture data and the moving picture data is newly produced, the moving picture data is produced through the process in which the input moving picture data is once variable length decoded, re-quantized, and variable length coded. That is, because the moving picture data is decoded and coded again to the inverse quantization processing, the calculation load is large and it can be said that it is difficult to quickly conduct the rate control. Further, the moving picture data is structured by a plurality of frames, and because, when the moving picture data is compression coded, in order to increase the efficiency, generally, the correlation with the preceding frame by one frame in time is used, and the predictive coding between frames is used. Then, when the moving picture data includes the frame on which the predictive coding between frames is conducted, the problem exists when the re-quantization is conducted by using the moving picture coding apparatus.

When the predictive coding between frames is used, the frame (Pi) on which the re-quantization is conducted in the moving picture coding apparatus 5001, is used for using for the predictive coding between frames in the subsequent frame (Pi + 1) after one frame in time, and is the frame which is necessary for addition when the (Pi + 1) is decoded.

Then, when the re-quantization is conducted in the moving picture coding apparatus 5001, because the re-quantization means changes the quantization value of the input data, the frame (Pi) before the re-quatization is conducted, differs from the frame (Pi') after the re-quantization is conducted. Accordingly, when the Pi' which is changed by the re-quantization, is added to the (Pi +1) on which the inverse quantization is conducted, and the (Pi +1) is decoded, because the difference exists between the Pi to be originally added and Pi', the decoded image is deteriorated. Hereinafter, the difference between the Pi and Pi' is called as the motion compensation error. That is, to the moving picture data for which the predictive coding between frames is used, when the moving picture data is produced by using the moving picture coding apparatus 5001, the image quality deterioration is caused due to the motion compensation error. Further, in order to prevent the image quality deterioration, it is necessary that the frame next to the frame on which the re-quantization is conducted, is re-corded including the motion compensation, and there is a problem that the processing time is further increased.

In the conventional moving picture coding apparatus, when the bit rate of the moving picture data which is previously coded, is changed, and the moving picture data is newly produced, it is necessary to code again after the moving picture data is decoded once and re-quantized again, and it is difficult to quickly produce the moving picture data.

When the conventional moving picture coding apparatus is used and the rate is controlled by conducting the re-quantization, in the next frame on which the re-quantization is conducted, because the image quality deterioration due to the motion compensation error is caused, it is difficult to conduct the rate control without causing the image quality deterioration.

### SUMMARY OF THE INVENTION

An object of the present invention is to solve the above mentioned two problems. That is, the object is that: when the bit rate of the coded moving picture data is changed, and the moving picture data is newly produced, the moving picture data production is quickly realized without decoding the moving picture data, andwithout causingthe image quality deterioration due to the motion compensation error.

In order to solve the above problems, in a moving picture coding apparatus in which the previously compression codedmoving picture data is an input, and the new moving picture data whose bit rate is different, is produced and outputted, the present invention is structured as follows.

Firstly, the moving picture data producing apparatus to produce the moving picture data which is an input of the moving picture data coding apparatus, is provided with a producing means for a rate correction data in which the bit amount is different to an area in which the bit generation amount in the P frame (predictive coding image between frames) is large, and which can conduct the rate change.

According to the above description, when the moving picture data is newly produced from the previously coded moving picture data, by adjusting to the objective bit rate, and by selecting and replacing the rate correction data whose bit amount is different in the input moving picture data, the moving picture data production can be quickly conducted by changing the bit rate without decoding the moving picture data. Further, by producing the rate correction data in an area in which the bit amount is large, the bit rate change can be effectively conducted.

Secondly, the moving picture data producing apparatus which produces the moving picture data which is an input of the moving picture coding apparatus is provided with a means by which the rate correction data in which the bit amount is different and the rate change can be conducted, is produced, to an area which is previously determined, and whose probability to be referred to from the next frame when the motion estimation is conducted, is low, in the P frame (predictive coding image between frames).

According to this, when the moving picture data is newly produced from the previously coded moving data, by selecting and replacing the rate correction data whose bit amount in the input moving picture data is different, by adjusting to the objective bit rate, the bit rate is changed and the moving picture data can be quickly produced without decoding the moving picture data. Further, by producing the rate correction data in an area whose probability to be referred to from the next frame, is low, the lowering of the predictive coding efficiency due to the influence of the search range limitation of the motion estimation can be reduced.

Thirdly, the moving picture data producing apparatus to produce the moving picture data which is an input of the moving picture coding apparatus, is provided with a means for producing the rate correction data whose bit amount is different, in the P frame, and provided with the motion compensation means for conducting the motion compensation without referring to from the area having the rate correction data, when the movement of the next frame is forecast.

According to this, when the moving picture data is newly produced from the previously coded moving picture data, even when the moving picture data is produced by selecting the rate correction data whose bit amount is different, in the input moving picture data, because the area is not subject to the motion estimation, the generation of the motion compensation error due to the replacement of the data can be prevented.

Fourthly, the moving picture data producing apparatus to produce the moving picture data which is the input data of the moving picture coding apparatus, is provided with a means for producing the rate correction data whose bit amount is different, and which can change the bit rate, to an area in which the referred degree from the next frame when the movement is forecast, is low, in the P frame.

According to the above description, when the moving picture data producing apparatus produces the moving picture data, the moving picture data can be produced without lowering the coding efficiency of the predictive coding between frames.

Fifthly, the moving picture data producing apparatus to produce the moving picture data which is the input data of the moving picture coding apparatus is provided with a means for producing the rate correction data, by removing the high frequency component of the original image, and by conducting the predictive coding between frames, to each P frame of the moving picture data.

According to the above description, when the moving picture data is newly produced without decoding the previously coded moving picture data, corresponding to the objective bit rate, by selecting each area of the rate correction data coded by removing the high frequency component, the fine bit rate control can be quickly conducted.

Sixthly, the moving picture data producing apparatus to produce the moving picture data which is the input data of the moving picture coding apparatus is provided with a means for producing the area information showing an area of the rear portion at which the bit can be deleted, in each area, as the rate correction data.

According to the above description, in the moving picture coding apparatus which produces the new moving picture data from the coded moving picture data, by adjusting to the objective bit rate, when each area of the input moving picture data is selected, and the rear portion bit is deleted, the bit rate control can be quickly conducted.

Seventhly, the moving picture data producing apparatus to produce the moving picture data which is the input data of the moving picture coding apparatus is provided with a means for producing the I frame whose bit amount is different, as the rate correction data, to each P frame.

According to this, in the moving picture coding apparatus which produces the new moving picture data from the previously coded moving picture data, by adjusting to the objective bit rate, and by replacing P frame of the input moving picture data with the I frame whose bit amount is different which is the rate correction data, the bit rate control can be quickly conducted without decoding the input moving picture data.

Eighthly, in the case where the moving picture data producing apparatus to produce the moving picture data which is the input of the moving picture coding apparatus is provided with a means for determining the quarry out area in each frame, and for producing the rate correction data by which the rate correction is possible, for at least an area more than one in each quarry out area in the frames, and a motion compensation means for inhibiting the motion estimation outside the area having the rate correction data in the preceding frame at the time of motion compensation and the quarry out area, when one portion in the frame is quarried out from the previously coded moving picture data and the moving picture data is newly produced, corresponding to the objective bit rate, by selecting the data whose bit amount is different, the bit rate is controlled and the moving picture data can be quickly produced without decoding the moving picture data. Further, because the motion estimation to the outside of the quarried out area is not conducted, even by using only the quarried out area of a portion of the frame, the decoding can be conducted without generating the motion compensation error.

### BRIEF DESCRIPTION OF THE PREFERRED EMBODIMENTS

Fig. 1 is a block diagram showing the structure of a moving picture data producing apparatus in the first embodiment of the present invention;
Fig. 2 is a block diagram showing the structure of a moving picture coding apparatus in the first embodiment of the present invention;
Fig. 3 is a block diagram showing the structure of the moving picture data producing apparatus in the second embodiment of the present invention;
Fig. 4 is a block diagram showing the structure of the moving picture data producing apparatus in the third embodiment of the present invention;
Fig. 5 is a block diagram showing the structure of the moving picture data producing apparatus in the fourth embodiment of the present invention;
Fig. 6 is a block diagram showing the structure of the moving picture data producing apparatus in the fifth embodiment of the present invention;
Fig. 7 is a block diagram showing the structure of the moving picture coding apparatus in the fifth embodiment of the present invention;
Fig. 8 is a block diagram showing the structure of the moving picture data producing apparatus in the sixth embodiment of the present invention;
Fig. 9 is a block diagram showing the structure of the moving picture coding apparatus in the sixth embodiment of the present invention;
Fig. 10 is a view showing an example of an area dividing the inside of the frame in the first embodiment of the present invention;
Fig. 11 is a view showing a compression frame buffer structure in the first embodiment of the present invention;
Fig. 12 is a view showing the rate correction area data in the first embodiment of the present invention;
Fig. 13 is a view showing the compression frame data in the first embodiment of the present invention;
Fig. 14 is a view showing the moving picture data structure in the first embodiment of the present invention;
Fig. 15 is a view showing the data structure of the rate correction data in the first embodiment of the present invention;
Fig. 16 is a view showing the content of the rate correction data in the first embodiment of the present invention;
Fig. 17 is a view showing the rate correction data header structure in the first embodiment of the present invention;
Fig. 18 is a view showing the referred area data in the third embodiment of the present invention;
Fig. 19 is a view showing the compression frame data in the fourth embodiment of the present invention;
Fig. 20 is a view showing the rate correction data header structure in the fourth embodiment of the present invention;
Fig. 21 is a view showing the structure of the moving picture coding apparatus in the fourth embodiment of the present invention;
Fig. 22 is a view showing a flow of a rate control method in the fourth embodiment of the present invention;
Fig. 23 is a view showing the structure of a Video Packet in the fifth embodiment of the present invention;
Fig. 24 is a view showing the Video Packet termination data structure in the fifth embodiment of the present invention;
Fig. 25 is a view showing the rate correction data structure and the rate correction data header structure in the fifth embodiment of the present invention;
Fig. 26 is a view showing the data content of the rate correction data in the fifth embodiment of the present invention;
Fig. 27 is a view showing the rate correction data structure and the rate correction data header structure in the sixth embodiment of the present invention;
Fig. 28 is a view showing the data content of the rate correction data in the sixth embodiment of the present invention;
Fig. 29 is a view showing the structure of the moving picture data producing apparatus in the seventh embodiment of the present invention;
Fig. 30 is a view showing an example of a quarry out area in the 1 frame in the seventh embodiment of the present invention. ;
Fig. 31 is a view showing the rate correction area data structure in the seventh embodiment of the present invention;
Fig. 32 is a view showing the compression frame data structure in the seventh embodiment of the present invention;
Fig . 33 is a view showing the rate correction data structure in the seventh embodiment of the present invention;
Fig. 34 is a view the rate correction data header structure in the seventh embodiment of the present invention;
Fig . 35 is a view showing the structure of the moving picture coding apparatus in the seventh embodiment of the present invention;
Fig. 36 is a view showing the Video Packet structure data in the fifth embodiment of the present invention;
Fig. 37 is a view showing the structure of I frame coding means in the sixth embodiment of the present invention; and
Fig. 38 is a block diagram showing the structure of the moving picture coding apparatus which is the conventional technology.

### DETAILED DESCRIPTION OF THE PREFERRED EMBODIMENTS

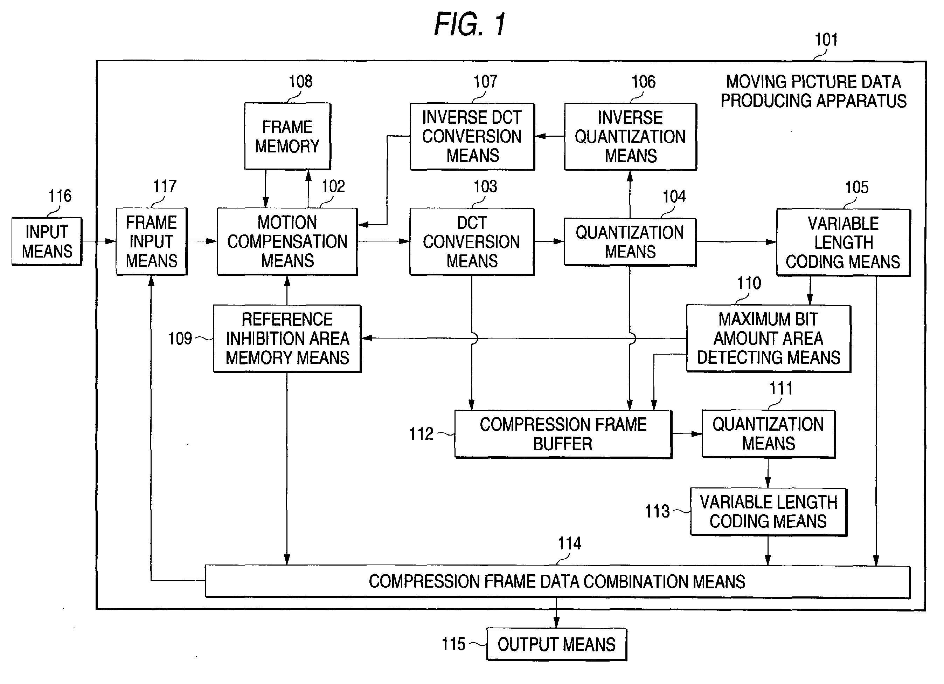

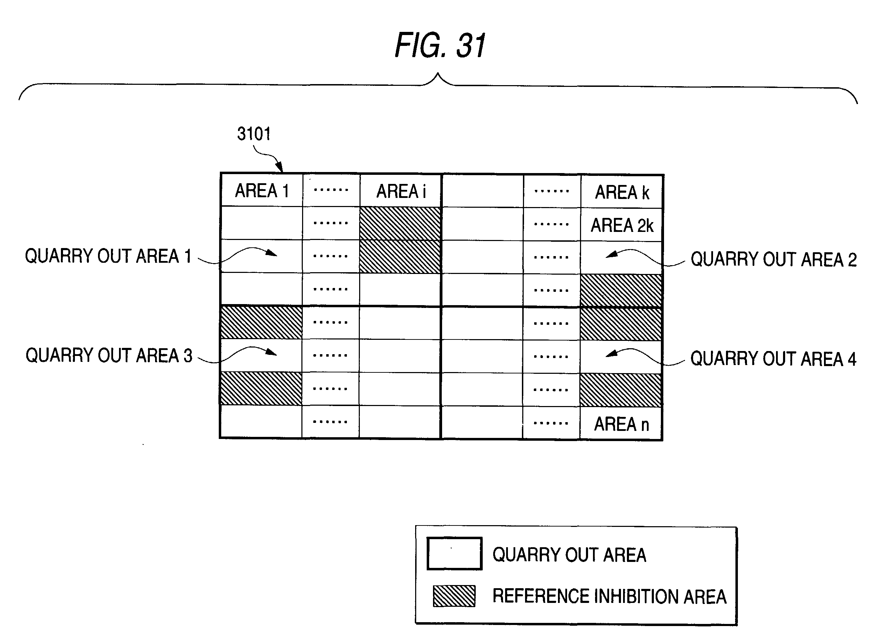

By using Fig. 1 to Fig. 37, embodiments of the present invention will be described below. In this connection, the present invention is not limited to these embodiments, but in the range not departing from the spirit of the invention, the present invention can be conducted in various modes.

### (Embodiment 1)

In the first embodiment, a moving picture coding apparatus by which the rate control is conducted without decoding by using the previously compression coded moving picture data, and the moving picture data is newly produced, and its method will be described below.

Initially, the moving picture data producing apparatus which previously produces the moving picture data which is an input of the moving picture coding apparatus, will be described below.

In Fig. 1, the structure of the moving picture data producing apparatus to previously produce the moving picture data having the data structure to quickly conduct the rate control, is shown.

In Fig. 1, a moving picture data producing apparatus 101 is provided with: a frame input means 117 connected to an input means 116; motion compensation means 102; DCT conversion means 103; quantizing means 104; variable length coding means 105; inverse quantizing means to conduct the decoding; inverse DCT conversion means 107; and a frame memory 108 to store the decoded frame, and is provided with: a maximum bit amount area detecting means 110 which is connected to the variable length coding means 105 and successively detects an area having the maximum bit amount; reference inhibition area memory means 109; compression frame buffer 112 connected to the DCT conversion means 103; quantization means 111 which is connected to the compression frame buffer 112 and conducts the quantization; and variable length coding means 113, and is provided with: a compression frame data combination means 114 which is connected to the variable length coding means 105, reference inhibition area memory means 109 and variable length coding means 113, and combines with the moving picture data, and has the structure to be connected to an output means 115.

The operation of the thus structured moving picture data producing apparatus will be described below.

Initially, the input means 116 inputs the non-compression image into the frame input means 117. When the frame input means 117 receives the frame coding end signal inputted from the compression frame data combination means 114, the non-compression one frame data inputs into the motion compensation means 102. However, when the first frame data is inputted, it is independent from the frame coding end signal, and simultaneously when the data is inputted from the input means 116, the non-compression frame data is inputted into the motion compensation means 102.

Then, when the motion compensation means 102 conducts the predictive coding between frames on the non-compression frame data inputted from the frame input means 117, after the area whose correlation is high in the preceding frame by one frame inputted from the frame memory 108 is detected, it conducts the subtraction, and outputs the subtracted frame data to the DCT conversion means 103. In this case, the motion compensation means 102 does not conduct the motion detection from the reference inhibition area of the preceding frame by one frame inputted from the reference inhibition area memory means 109. Further, it does not conduct the motion compensation on the data on which the coding in the frame is conducted, and the input data is outputted to the DCT conversion means as it is.

The DCT conversion means 103 conducts the DCT conversion on the frame data which is inputted by the motion compensation means 102, and outputs the DCT coefficient to the quantization means 104 and the compression frame buffer 112.

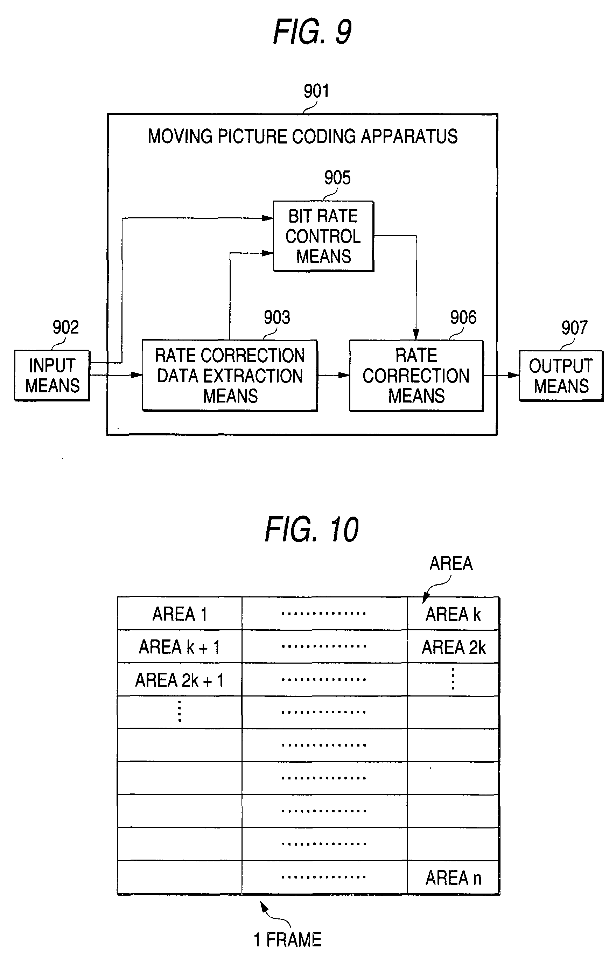

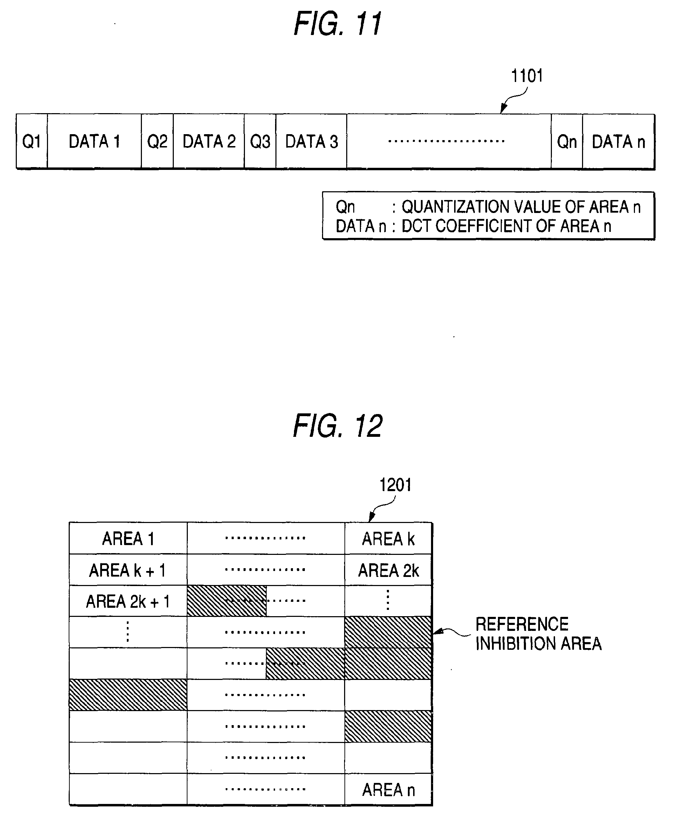

In Fig. 10, an example of the dividing method of an area in the frame is shown. Herein, the area shown in Fig. 10 is structured by an arbitrary number of macro-blocks (for example, 16 x 16 pixels), and any shape maybe allowable, and is not limited to the shape shown in Fig. 10. Further, the structure of the compression frame buffer is shown in Fig. 11. The compression frame buffer respectively continuously accommodates the quantization amount and the DCT coefficient, corresponding to each area in Fig. 10.

The quantization means 104 quantizes the DCT coefficient obtained by the DCT conversion means 103 for each area shown in Fig. 10, and the quantized DCT coefficient is outputted to the inverse quantizationmeans 106 and the variable length coding means 105, and the quantization value used for the quantization is outputted to the compression frame buffer 112. The compression frame buffer 112 makes the DCT coefficient for one frame inputted by the DCT conversion means 103 for each area shown in Fig. 10, and the quantization value inputted by the quantization means 104 respectively correspond to each other as shown in Fig. 11, and stores them.

The variable length coding means 105 conducts the variable length coding on the quantized DCT coefficient, and outputs it to the maximum bit amount area detecting means 110 and the compression frame data combination means 114. Herein, the data which is coded by the variable length coding means 105 is called the normal frame data.

Further, the inverse quantization means 106 conducts the inverse quantization on the DCT coefficient quantized by the quantization means 104, and outputs it to the inverse DCT conversion means 107. The inverse DCT conversion means 107 conducts the inverse DCT conversion on the DCT coefficient obtained in the inverse quantization means 106, and outputs it to the motion compensation means 102. The motion compensation means 102 decodes the frame by using the inverse DCT converted coefficient and the decoding frame which is the preceding frame by one frame inputted by the frame memory, and renews the decoding frame of the frame memory. However, for the I frame, the inverse DCT converted frame is stored in the frame memory as it is.

As described above, in the variable length coding means 105, when the coding of one frame is completed, the maximum bit amount detecting means 110 detects a predetermined number of areas in order of area having the larger bit amount from the area including the maximum bit amount, in the frame coded by the variable length coding means 105, and outputs the rate correction area data showing the detected areas to the reference inhibition area memory means 109 and the compression frame buffer 112. In Fig. 12, an example of the rate correction area data is shown. In Fig. 12, a black area shows the selected areas by the frame maximum bit area detecting means, and this area is defined as the reference inhibition area.

The reference inhibition area memory means 109 outputs the correction area data showing the detected area by the maximum bit amount area detecting means 110 to the motion compensation means 102 and the moving picture data combination means 114. Then, the compression frame buffer 112 cuts out the DCT coefficient and the quantization value of the area corresponding from the inside of the compression frame buffer, to the reference inhibition area of the correction area data inputted by the maximum bit amount area detecting means 110, and outputs them to the quantization means 111. The quantization means 111 conducts the quantization by using a plurality of quantization value s before and after the quantization value s inputted from the compression frame buffer 112, on the DCT coefficient inputted from the compression frame buffer 112, and outputs it to the variable length coding means 113.

In the quantization means 111, when the quantization is conducted by using the different quantization value , the data whose bit amount is different can be produced.

For example, when the quantization is conducted by the quantization value Q = 2, on the input stream in which an image plane size is CIF (352 x 288) and the frame rate is 30 fps, and the MPEG 4 stream is made, the bit rate is about 1.6 Mbps, and like as at Q = 6, about 384 kbps, at Q = 16, about 128 kbps, and at Q = 30, about 56 kbps, the data whose bit rate is different, can be produced corresponding to the quantization value Q.

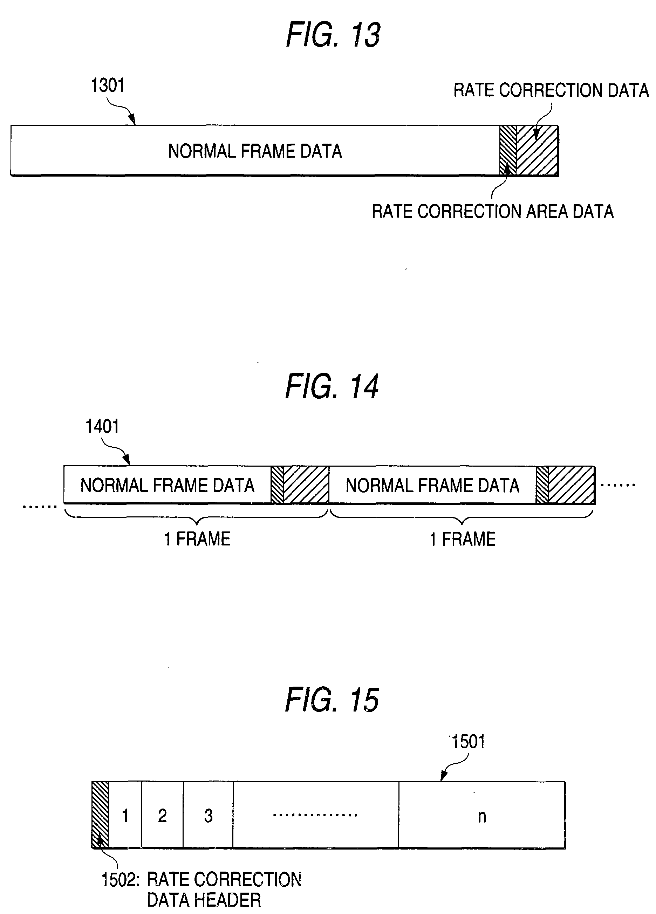

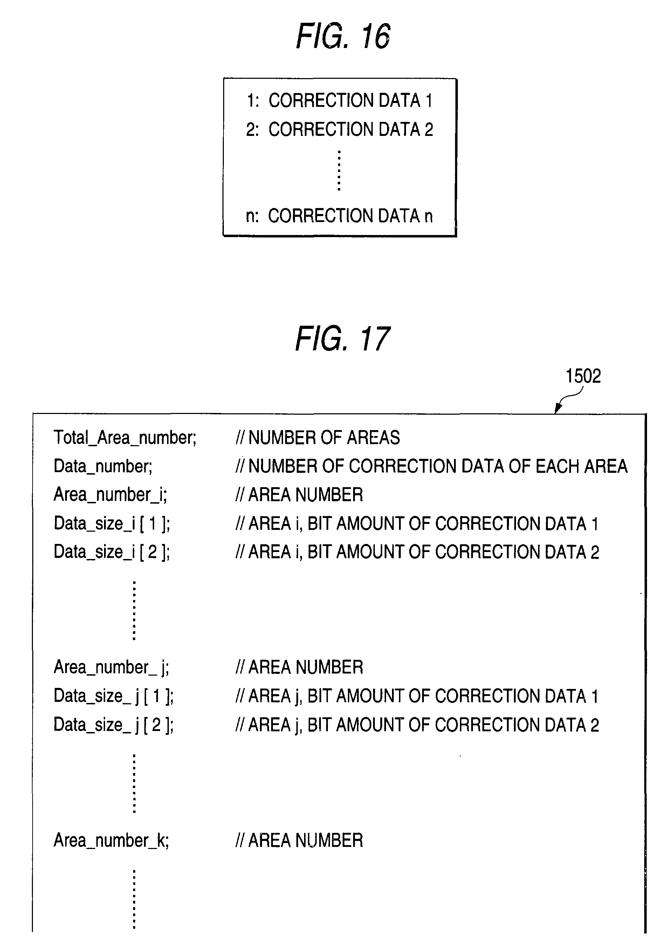

The variable length coding means 113 conducts variable length coding on the DCT coefficient quantized by the quantization means 111, and produces the correction data, and produces the rate correction data having the number of areas, the number of correction data of each area, the area number and the data size of respective correction data as the header information, and outputs it to the compression frame data combination means 114. Herein, the data produced by the variable length coding means 113 is defined as the rate correction data. In Fig. 15, the structure of the rate correction data is shown, and the content of the rate correction data is shown in Fig. 16. Further, the structure of the rate correction data header is shown in Fig. 17. In Fig. 17, the rate correction data header 1502 has a structure in which the number in each area of the correction data whose bit amount is different, which is produced by changing the number of areas and the quantization value, and the area number and the bit amount of respective correction data are stored as the fixed length data. Herein, the order of areas is defined as the order in which the bit amount is larger. Then, in Fig. 15, the rate correction data has the structure in which the correction data is stored succeeding to the rate correction data header 1502 in order of the area in which the bit amount of the correction data is larger. The structure of the compression frame data is shown in Fig. 13. In Fig. 13, the compression frame data has a structure in which the rate correction area data and the rate correction data are successively stored after the normal frame data.

The compression frame data combination means 114 stores the normal frame data inputted by the variable length coding means 105, the correction area data inputted by the reference inhibition area memory means 109, and the rate correction data inputted by the variable length coding means 113 in order as shown in Fig. 13, and outputs them as the compression frame data 1301 to the output means 115, and outputs the frame coding end signal showing that the coding of one frame is completed, to the frame input means 117. The structure of the moving picture data is shown in Fig. 14. In Fig. 14, the moving picture data 1401 has a structure in which the compression frame data is successively stored.

Thus coded moving picture data 1401 has a structure in which, for each frame, the normal frame data, the rate correction area data showing the area in which the rate correction data exists, and the rate correction data whose bit amount is different, are arranged in order. Then, the area having the rate correction data, that is, the reference inhibition area inhibits the reference from the next frame at the time of motion estimation, and because it is in the condition that the motion estimation is not received from the next frame, even when the data of this area is replaced with the rate correction data and the bit rate change is conducted, the motion compensation error is not generated when the next frame is decoded.

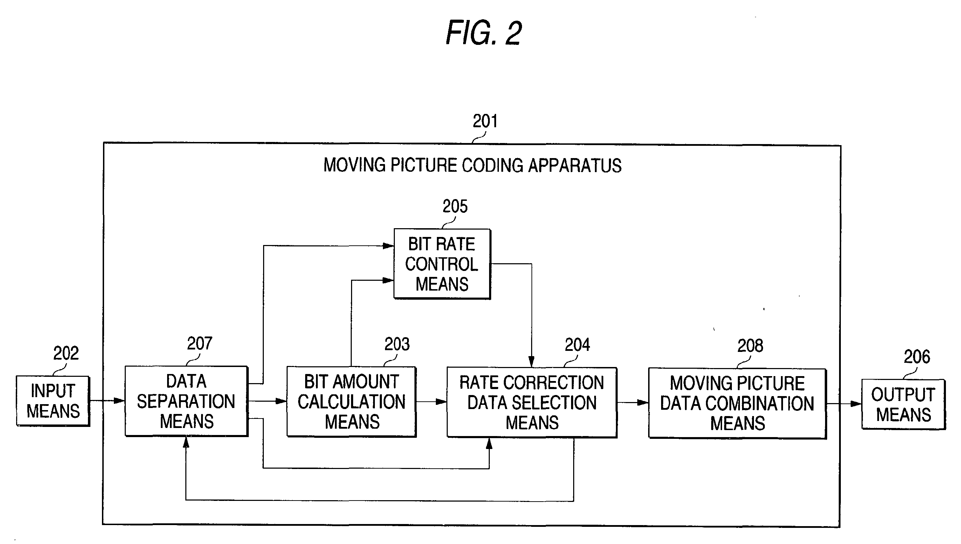

Next, the structure of the moving picture coding apparatus by which the moving picture data coded by the moving picture coding apparatus shown in Fig. 1 is used as the input data, and the rate control is conducted without decoding the input data, and the rate changed moving picture data is newly produced, is shown in Fig. 2.

In Fig. 2, the moving picture coding apparatus 201 has a data separation means 207 connected to an input means 202, bit amount calculation means 203, rate correction data selection means 204, bit rate control means 205 and moving picture combination means 208, and has a structure in which it is connected to an output means 206.

The operation of thus structured moving picture coding apparatus will be described below. In Fig. 2, the input means 202 inputs the compression coded moving picture data 1301 and the objective bit rate which is determined by the user, to the data separation means 207. When the data is inputted by the input means 292, the data separation means 207 inputs the objective bit frame by each one frame to the bit rate control means 205, and further, takes out the data in order from the leading data of the inputted moving picture data, and inputs the normal frame data for each one frame to the bit amount calculation means 203, and inputs the rate correction area data and the rate correction data for each one frame to the rate correction data selection means 204. Herein, when the input means 202 inputs the frames other than the first one frame of the moving picture data, after the frame coding end signal is received from the rate correction data selection means 204, it conducts the respective data input.

The bit amount calculation means 203 calculates the bit amount of the inputted normal frame data, and outputs the bit amount to the bit rate control means 205, and outputs the normal frame data to the rate correction data selection means.

The bit rate control means 205 compares the objective bit rate inputted from the inputted means 202 to the current bit amount inputted from the bit amount detecting means 203, and the insufficient bit amount necessary for satisfying the objective bit rate, or sufficient bit amount is obtained, and is outputted to the rate correction data selection means 204.

The rate correction data selection means receives the bit amount which is a bit rate error, inputted by the bit rate control means 205, and in order to satisfy the objective bit rate, to the area shown by the rate correction area data inputted by the data separation means 207, it compares the bit amount of the area in the normal frame data to the bit amount of the plurality of correction data stored in the rate correction data header 1502, and when the data is replaced, the correction data by which the bit rate error becomes small, is selected in order of stored areas, and by replacing the data in the normal frame data with selected correction data, the bit amount is changed. Further, when the bit amount error is large, the correction data is selected from the next area, and by replacing the data, the bit amount is changed. By repeating the above processing, the moving picture data in which the bit amount error is made minimum, is outputted to the moving picture data combination means 208, and one frame coding end signal is outputted to the data separation means 207.

The moving picture data combination means 208 connects the frame data inputted for each frame from the rate correction data selection means 204 in order, and produces the moving picture data and outputs to the output means 206.

Herein, when the area is selected by the rate correction data selection means 204 and the data is replaced corresponding to the bit amount, there is a problem that the motion compensation error is caused by the replacement of the data which is referred to as the motion compensation after I frames in the conventional method, and the image quality deterioration is caused, however in the present invention, because the reference to the area having the rate correction data is inhibited by the reference inhibition area memory means 109 in the moving picture data producing apparatus in Fig. 1, even when the correction data is selected and replaced, the motion compensation error is not caused. Accordingly, the rate control can be quickly conducted by selecting the correction data without decoding the moving picture data and without causing the image quality deterioration due to the motion compensation error.

Further, in the present embodiment, the number of areas detected by the maximum bit area detecting means 110 is determined by the user corresponding to, to what % the bit rate of the input data can be changed, and the larger the number of areas is, the larger the range of the bit rate change is. However, when the number of areas is increased, because the reference area used for the motion estimation becomes narrow, the coding efficiency is lowered. In order to solve the problem, the maximum bit area detecting means 110 detects the area from the area having the maximum bit in the order in which the bit amount is larger. It is because the compression coded data does not always have a uniform bit amount in the frame, and there are cases where the area having the larger bit amount exists locally, and when the correction data is provided to such the area in which the bit amount is large, the bit rate change becomes easy, and the reference inhibition area can be reduced.

Further, the number of rate correction data of each area selected by the maximum bit area detecting means 110 and the value of respective quantization value also contribute to the width of the bit rate change. For example, when the quantization of the normal frame data is conducted at Q = 6, the bit rate is about 384 kbps, and as the area having the rate correction data, a plurality of areas having the data amount of about 3/4 of the whole in total are selected from the areas whose bit amount is large. When the deviation of the bit is considered, an area of the areas is lower than 3/4. For these areas, by using the quantization values Q = 2, Q = 30, two kinds of rate correction data of about 1.6 Mbps, and about 56 kbps are produced. Whole data size including the rate correction data is about 1.6 Mbps. When the moving picture data including the rate correction data is combined with the rate correction data, the bit rate change can be arbitrarily conducted in the range of about 1.5 Mbps to about 64 kbps, and the moving picture data matched with bit rates of various transmission paths can be produced.

Further, the calculation cost relating to the rate change is low, and a plurality of streams in which bit rates are different, can be quickly produced. Further, when the stream whose bit rate is different is prepared from the initial time, the bit rate is fixed and its data size becomes large. Comparing to that case, in the present embodiment, it is enough when the data size is slightly larger than the maximum bit rate which is presumed.

As described above, in the present embodiment, the motion compensation means which does not conduct the motion compensation from the reference inhibition area, and the moving picture data producing apparatus which produces the moving picture data having together the rate correction data, and the area selection means which selects the rate correction data corresponding to the bit rate, are provided, thereby, the apparatus can quickly conduct the rate control without decoding the moving picture data, and without causing the image quality deterioration due to the motion compensation error, and can quickly produce a plurality of streams in which the bit rate is different, thereby, its practical effect is large.

### (Embodiment 2)

In the second embodiment, an apparatus in which the rate control is conducted from the previously coded moving picture data without being decoded, and the moving picture data is newly produced, and which is characterized in that, as the area selection method to produce the rate correction data, the known area which is hardly referred to at the time of motion estimation, is used, will be described below.

In the present embodiment, the moving picture coding apparatus by which the rate change is conducted from the previously coded moving picture data, and moving picture data is newly produced, is the same as in Embodiment 1.

A moving picture data producing apparatus by which the moving picture data which is an input of the moving picture coding apparatus to quickly conduct the rate control, is previously produced, will be described below.

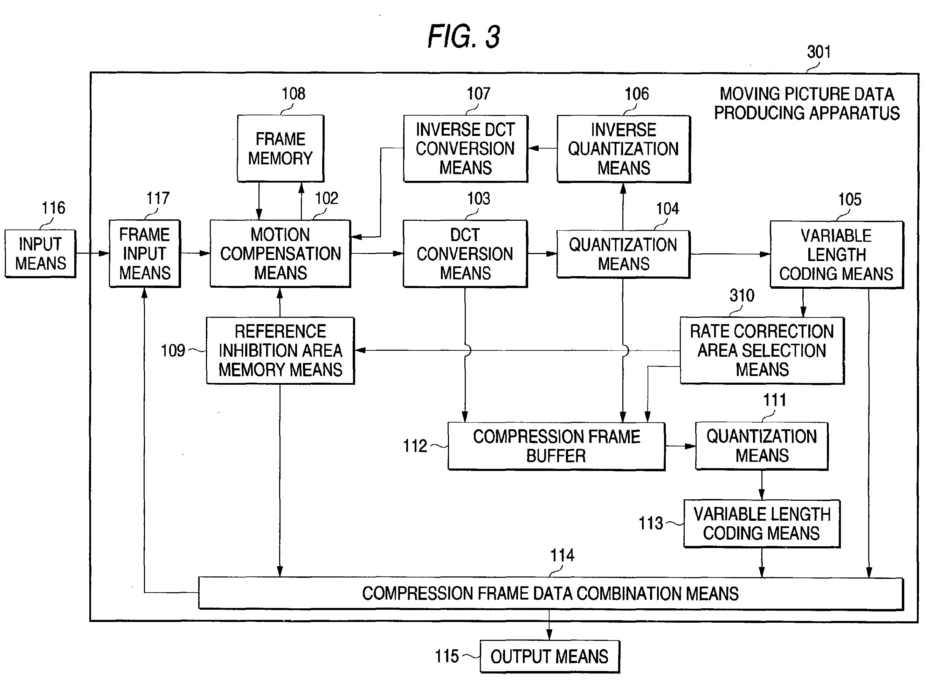

In Fig. 3, the structure of the moving picture data producing apparatus by which the moving picture data having the data structure to quickly conduct the rate control is produced, is shown.

In Fig. 3, the moving picture data producing apparatus 301 is provided with: a frame input means 117 connected to an input means 116; motion compensation means; DCT conversion means 103; quantization means 104; variable length coding means 105; inverse quantization means 106 for conducting the decoding; inverse DCT conversionmeans 107; and frame memory 108 for storing the decoded frame, and the apparatus is connected to the variable length coding means 105, and is providedwith: the rate correction area selection means 310 for selecting the area producing the rate correction data; reference inhibition area memory means 109; compression frame buffer 112 to connect to the DCT conversion means 103; quantization means 111 to connect to the compression frame buffer and to conduct the quantization; and variable length coding means 113, and is connected to the variable length coding means 105, reference inhibition area memory means 109, and variable length coding means 113, and is provided with a compression frame data combination means 114 to combine the moving picture data, and has a structure which is connected to an output means 115.

Operations of thus structured moving picture coding apparatus will be described below.

In Fig. 3, operations other than the rate correction selection means 310 are entirely the same as in Embodiment 1. In Fig. 3, the variable length coding means 105 conducts the variable length coding on the quantized DCT coefficient inputted from the quantizationmeans 104 in the same manner as in Embodiment 1, and outputs it to the rate correction area selection means 310 and the compression frame data combination means 114. Herein, the data coded by the variable length coding means 105 is called the normal frame data.

As described above, when the coding of the normal frame data is completed, the rate correction data area selection means 310 selects the area for the rate correction from the frame coded in the variable length coding means 105, and outputs the rate correction area data 1201 showing the selected area as shown in Fig. 12, to the reference inhibition area memory means 109 and the compression frame buffer 112. Herein, the area selected as the rate correction area is an area to which the probability to be referred from the next frame at the time of the motion estimation, is low, for example, such as a rim portion of the frame, and is defined as the known area which is previously stored in the rate correction data area selection means 310.

In the present embodiment, it is inhibited that the area for rate correction is referred to at the time of motion estimation, and by inhibiting the reference, because the search area at the time of motion estimation is small, there is a possibility that the predictive coding efficiency is lowered. Therefore, the area which is hardly referred to at the time of motion estimation, is defined in such a manner that it is selected as the rate correction area. Thereby, even when the search area at the time of motion estimation becomes small, because the area has the small probability to be originally referred to, the practical search area is not small, that is, the predictive coding efficiency can be prevented from lowering. Operations after the compression frame buffer 112 are the same as in Embodiment 1.

Thus coded moving picture data has the structure having, to each frame, the compression coded normal frame data, rate correction area data showing the area in which the rate correction data exists, and rate correction data including a plurality of correction data whose bit amount is different, and the area having the rate correction data is in the condition that it is not referred to at the time of motion estimation from the next frame.

As described above, when the coded moving picture data is an input, and by using the moving picture coding apparatus shown in Fig. 2, in the same manner as in Embodiment 1, the rate correction data corresponding to the objective bit rate is selected, and it is replaced with the data in the normal frame data, by producing the new moving picture data, the rate control can be quickly conducted without decoding the data.

Further, the area to produce the rate correction data is defined as the known area, such as the rim portion of the frame which is hardly referred to at the time of motion estimation, and the size of the area can be determined by the user corresponding to the range of the change of the bit rate. Further, the number of the rate correction data and the quantization value in each area also contribute to the width of the bit rate change.

For example, when the quantization of the normal frame data (size: CIF, frame rate 30 fps) is conducted at Q = 24, the bit rate becomes about 100 kbps. To this. the area of the size of total of about 40 % at the ratio of the area of the frame, in which the motion estimation is hardly conducted, is defined as the rate correction data area, and on respective area data, the quantization is conducted at the two quantization values Q = 16 and 31, and the rate correction data having the bit rate corresponding to about 128 kbps, and about 32 kbps are produced. With the moving picture data having these rate correction data, when the rate correction data is combined, the bit rate can be arbitrarily changed between about 128 kbps and about 64 kbps, and the moving picture data corresponding to the fluctuation of the band of the transmission path can be quickly produced. Further, the calculation cost according to the bit rate change is low, and a plurality of moving picture data whose bit rate is different, can be quickly produced.

In the present embodiment, the range of the bit rate change is smaller as compared to Embodiment 1, but the present invention is characterized in that, because the area which is set as the reference inhibition area, has the character which is hardly forecast, the lowering of the coding efficiency can be prevented. Further, the data size of the moving picture data is about 128 kbps, and almost equal to the maximumvalue of the bit rate change.

As described above, in the present embodiment, when the moving picture data producing apparatus in which a plurality of rate correction data whose bit amount are different, are produced, to the area to which the probability to be referred at the time of motion estimation is low, and the control means which is matched with the objective bit rate, and selects the rate correction data, and conducts the rate control, are provided, because the predictive coding efficiency at the time of motion estimation is not lowered, and the rate control can be quickly conducted without causing the image quality deterioration due to the motion compensation error, a plurality of moving picture data whose bit rates are different, can be quickly produced, thereby, its practical effect is large.

### (Embodiment 3)

In the third embodiment, the moving picture data producing apparatus in which the rate control is conducted from the previously coded moving picture data without being decoded, and the moving picture data is newly produced, wherein the apparatus has, to the moving picture data, by using the referred degree at the time of the motion estimation, a means for selecting the rate correction area to produce a plurality of data in which the bit amount is different, will be described below.

Further, in the present embodiment, the moving picture coding apparatus in which the rate control is conducted from the previously coded moving picture data, and the moving picture data is newly produced, is entirely the same as in Embodiment 1.

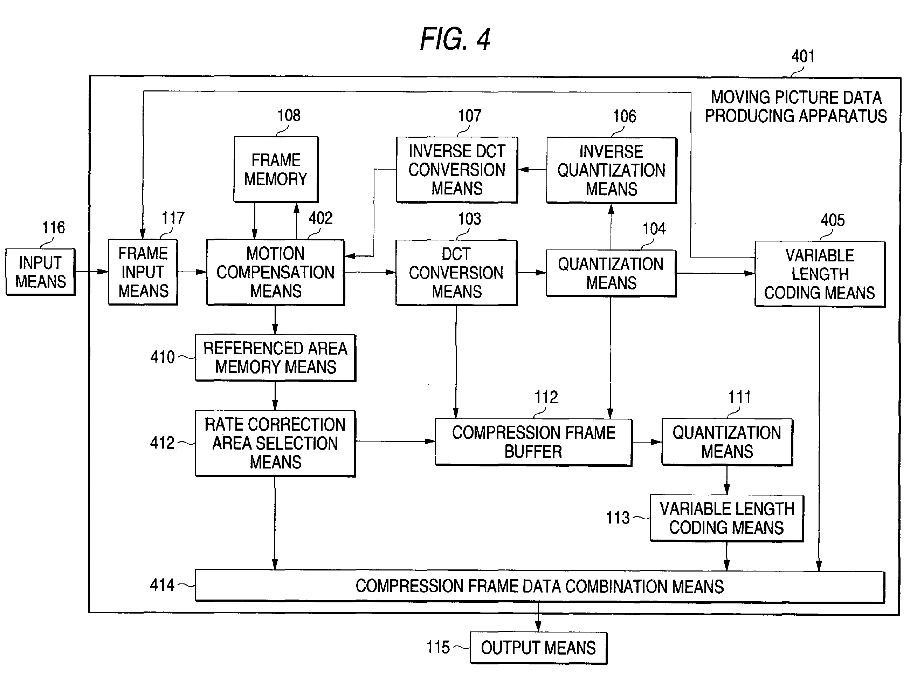

The structure of the moving picture data producing apparatus is shown in Fig. 4. In Fig. 4, a moving picture data producing apparatus 401 has: a frame input means 117 connected to an input means 116; motion compensation means 402; DCT conversion means 103; quantization means 104; variable length coding means 105; inverse quantization means 105 for decoding; inverse DCT conversion means 107; and frame memory 108 for storing the decoded frame, and a referred area memory means 410 connected to a motion compensation means 402; and a rate correction area selectionmeans 412, and a compression frame buffer 112 connected to a DCT conversion means 404; quantization means 111; and variable length coding means 113, and a rate correction area selection means 412; compression frame combination means 414 connected to the variable length coding means 113 and variable length coding means 105, and has a structure in which these means are connected to the output means 115.

Operations of thus structured moving picture producing apparatus will be described below. In the moving picture coding apparatus 401, the input means 116, frame input means 117, DCT conversion means 103, quantization means 104, variable length coding means 105, inverse quantization means 106, inverse DCT conversion means 107, and frame memory 108 produce the normal frame data in entirely the same manner as in Embodiment 1. In this connection, the variable length coding means 405 outputs the frame coding end signal to the frame input means 117 when the normal frame data producing is completed. In this manner, when the normal frame data for one frame is produced, the frame input means 117 outputs the next non-compression frame to the motion compensation means 402.

The motion compensation means 402 does not conduct the motion compensation on the I frame, and outputs to the DCT conversion means 103, and in the case of other than I frame, the motion compensation is conducted by using the preceding frame by 1 frame and the frame inputted by the frame input means 117. Further, in the preceding frame by 1 frame, the area information which is referred to at the time of motion estimation, is outputted to the referred area memory means 410.

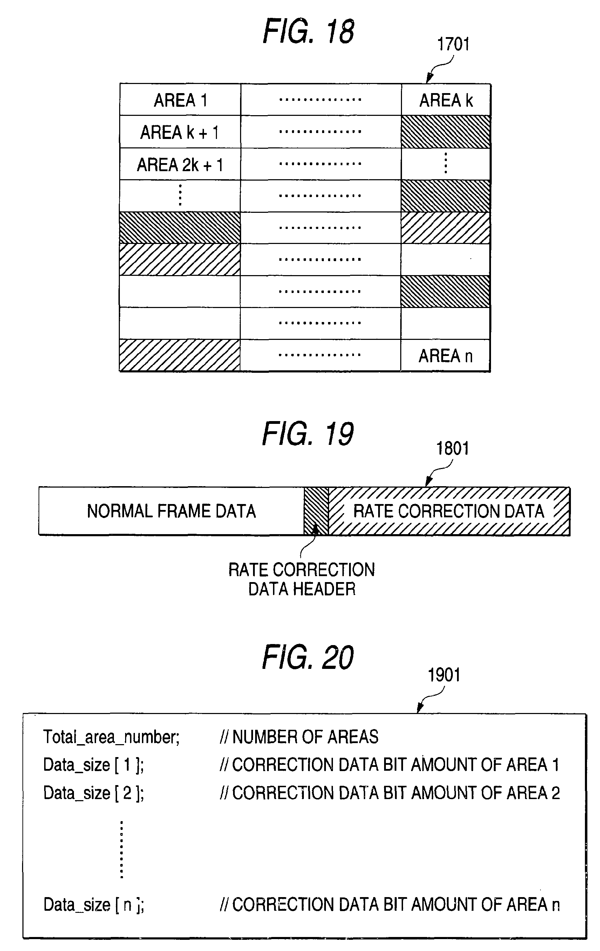

The referred area data is shown in Fig. 18. The referred area data is the data in which the referred degree of each area is stored. In the referred area data, the referred degree of each area means that, in pixels in the area, total pixel number which is referred to at the time of motion estimation from the next frame, is shown, and in Fig. 18, it is defined that the thicker the color of the area is, the higher the referred degree is.

The referred area memory means 410 stores the referred area inputted from the motion compensation means 403, and outputs the referred area data showing the referred area to the rate correction area selection means 412.

The rate correction area selection means 412 selects, in the inputted referred area data, a predetermined number of areas in the order from the area in which the referred area is low, as the rate correction data area. Further, the selected area is the rate correction area in the preceding frame by one frame to the frame currently inputted by the frame input means, and outputs the rate correction area data 1201 showing the selected rate correction area to the compression frame buffer 112 and the moving picture data combination means 414. Further, the operation of the compression frame buffer 112, quantizationmeans 111, and variable length coding means 113 is the same as in Embodiment 1.

The compression frame combination means 414 combines the normal frame data inputted from the variable coding means 405, the rate correction area data inputted from the rate correction area selection means 412, and the rate correction data inputted from the variable length coding means 113 as shown in Fig. 13, and outputs it to the output means 115. In the present embodiment, because it is not conducted that the reference inhibition area is set at the time of motion estimation and the search area is limited, as shown in Embodiments 1 and 2, the search area is not limited, and the predictive coding effect can be more enhanced than in Embodiments 1 and 2.

By using the coded moving picture data as an input as described above, and the moving picture coding apparatus in Fig. 2, when the new moving picture data is produced in the same manner as in Embodiment 1, the rate control can be quickly conducted without decoding the data. Further, because, as the area having the rate correction data, the area to which the referred degree is low at the time of motion estimation, is selected, even when the rate correction data is selected at the time of the rate control, the motion compensation error is not caused. Further, the number of area to be selected in the order from the area in which the referred degree is lower, can be determined by the user corresponding to the range of the bit rate change. Further, the number of rate correction data and the quantization value in respective areas also contribute to the width of the bit rate change.

For example, when the quantization of the normal frame data (size: CIF, frame rate 30 fps) is conducted at Q = 24, the bit rate is about 100 kbps. In contrast to this, the area in which the referred degree is low and the size is the total of about 30 % in the area ratio of the frame, is defined as the rate correction data area, and to respective areas, the quantization is conducted at two quantization values of Q = 16 and 32, and the rate correction data having the bit rate corresponding to about 128 kbps and about 32 kbps is produced. With the moving picture data having this rate correction data, when the rate correction data is combined, the bit rate can be arbitrarily changed between about 128 and about 64 kbps, the moving picture data corresponding to the fluctuation of the band of the transmission path can be quickly produced. Further, the calculation cost according to the bit rate change is low, and a plurality of moving picture data whose bit rate are different, can be quickly produced. Further, the data size of the moving picture data is about 128 kbps, and it is almost equal to the maximum value of the bit rate change. In this example, the range of the bit rate change is smaller than in Embodiment 1, however, because the reference inhibition area is not provided, the lowering of the coding efficiency can be prevented, and because the area having the rate correction data is an area to which the practical referred degree is low, the generation of the motion compensation error which accompanies the replacement of the data can be suppressed to small.

As described above, in the present embodiment, the moving picture data structure having the rate correction data to the area to which the referred degree is low at the time of motion estimation, and the moving picture data producing apparatus which selects the rate correction data and changes the bit rate, are provided, and thereby, because the predictive coding efficiency of the motion estimation is not lowered and the motion compensation error generated when the rate correction data is used is lowered, and the rate control can be quickly conducted, a plurality of moving picture data whose bit rates are different, can be quickly produced, and its practical effect is large.

### (Embodiment 4)

In the fourth embodiment, in an apparatus by which the previously coded moving picture data is not decoded, and the rate control is conducted, and the new moving picture data is produced, the apparatus characterized in that the input moving picture data has the rate correction data whose bit amount is slightly different, on the entire frame, will be described below.

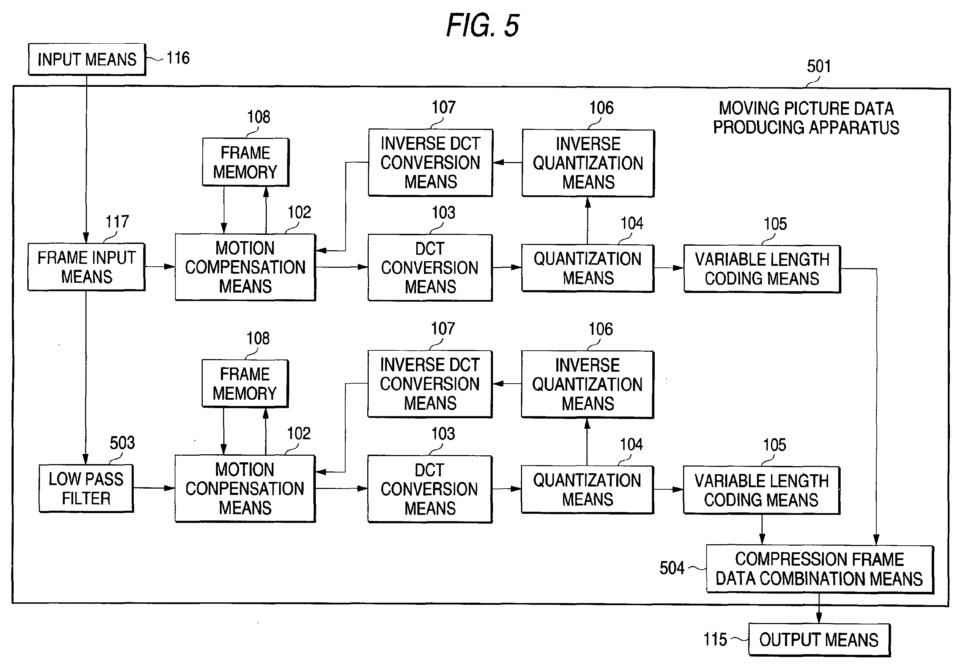

In Fig. 5, the structure of the moving picture data producing apparatus by which the coding is previously conducted for the input data of the moving picture coding apparatus to conduct the rate control, is shown. In Fig. 5, the moving data producing apparatus 501 is provided with: the frame input means 117 connected to the input means 116; motion compensation means 102; DCT conversion means 103; quantization means 104; and variable length coding means 105, and is provided with the inverse quantization means 106 for conducting the decoding; inverse DCT conversion means 107; and frame memory 108. Further, the moving picture coding apparatus 501 is provided with: a low pass filter 503 connected to the frame input means 117; motion compensation means 102 connected to the low pass filter 503; DCT conversion means 103; quantization means 104; and variable length coding means 106, and is provided with: the inverse quantisation means 106 which is connected to the quantization means 104 and conducts the decoding; inverse DCT conversion means 107; and frame memory 108. Further, the moving picture data producing apparatus 501 is structured in such a manner that it is connected to the variable length coding means 105, the compression frame data combination means 504 connected to the variable length coding means 105, and output means 115.

The operation of thus structured moving picture data producing apparatus will be described below. In the moving picture coding apparatus 501, teh frame input means 117, motion compensation means 102, DCT conversion means 103, quantization means 104, variable length coding means 105, inverse quantization means 106, invesr DCT conversion means 107, and frame memory 108 are blocks for producing the normal frame data in the same manner as in Embodiment 1.

Further, in Fig. 5, the low pass filter 503 causes the non-compression frame to pass through the low pass filter, reduces the high frequency information of the input frame, and outputs it to the motion compensation means 102. Hereinafter, by using the DCT conversion means 103, quantization means 104, variable length coding means 506, inverse quantization means 106, inverse DCT conversion means 107, and frame memory 108, in the same manner as in the normal frame data production, by using the same quantization value, the frame data is produced. In this connection, the frame data produced herein is the data produced in such a manner that the data in which the high frequency of the input frame is reduced by the low pass filter 503, is coded, and is the data in which its bit amount is fewer than the normal frame data, and has the structure in which it has the correction data to the whole area in 1 frame shown in Fig. 10, and this data is called the rate correction data. The variable length coding means 506 calculates, to the rate correction data, the rate correction data header as shown in Fig. 20, and outputs the rate correction data and the rate correction data header to the moving picture combination means 20. The rate correction data header has the structure having the number of areas in the rate correction data 1 frame, and the bit amount in each area.

The compression frame data combination means 504 combines the normal frame data inputted from the variable length coding means 105, rate correction data header inputted from the variable length coding means 506, and rate correction data as shown in Fig. 19, and outputs it to the output means 115.

As described above, in the present embodiment, the structure having the rate correction data is applied to all areas of 1 frame, and respective data amounts of the normal frame outputted from the variable length coding means 105, and the rate correction data outputted from the variable length coding means 106, are slightly different, by reducing the high frequency component of the non-compression frame.

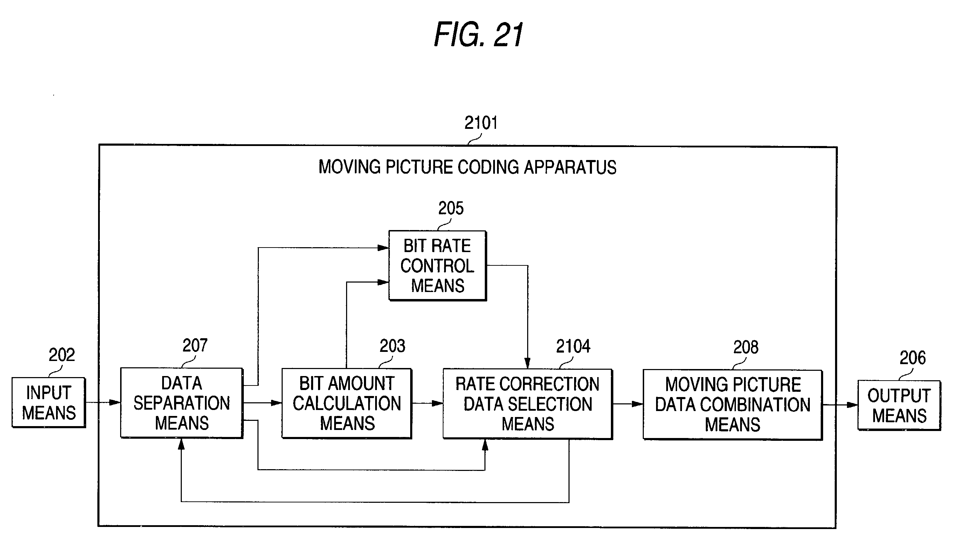

The structure of the moving picture coding apparatus in which the moving picture data coded as described above is an input, and the rate control is conducted without decoding the data, and the moving picture data is newly produced, is shown in Fig. 21. In Fig. 21, the moving picture coding apparatus 2101 is provided with: the data separation means 207 connected to the input means 202; bit amount calculation means 203; rate correction data selection means 2104; bit rate control means 205; and moving picture data combination means 208, and the apparatus has the structure in which these are connected to the output means 206.

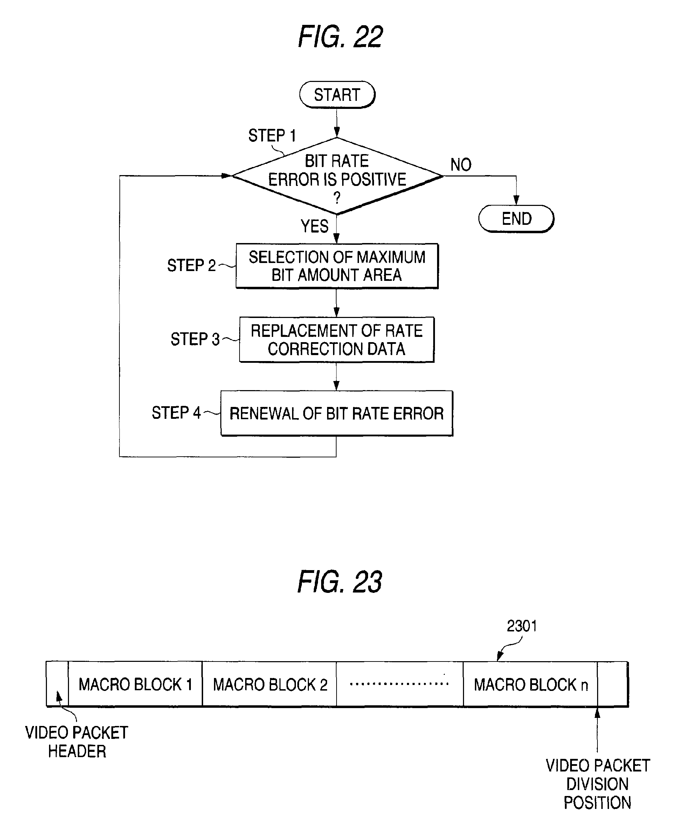

The operation of thus structured moving picture coding apparatus 2101 will be described below. In Fig. 21, the operations of blocks other than the rate correction data selection means 2104 are entirely the same as in Embodiment 1. The rate correction data selection means 2104 conducts, by using the bit rate error inputted from the bit rate control means 205, rate correction data header inputted from the data separation means 207, rate correction data, and normal frame data inputted from the bit amount calculation means 203, the rate control so that the bit rate error is reduced. A flow of the processing of the rate control is shown in Fig. 22.

As shown in Fig. 22,
STEP 1: initially, the positive or negative of the bit rate error is judged, and when it is negative or zero, the sequence is completed, and when it is positive, that is, bit is excessive,
STEP 2: the rate correction data header is referred to, and the maximum area of the bit amount is selected.
STEP 3: to the selected area, the normal frame data is replaced with the rate correction data,
STEP4: after the data is replaced, the bit rate error is renewed, and the sequence advances to the bit rate error judgement process .

The above processing is repeated until the bit rate error becomes negative, and when the processing is completed, the frame data is outputted to the moving picture data combination means. The moving picture data combination means 208 connects the frame data inputted for each 1 frame in order, and the moving picture data is produced, and outputted to the output means 206.

In the present embodiment, after the rate correction data passes through the low pass filter, because it is quantized at the same quantization value as the normal frame, there is only a little difference in the bit amount, as compared to the normal data which is coded without low pass filter, and by selecting the rate correction data to a plurality of areas, the fine rate control can be conducted.

The frequency characteristic of this low pass filter can be determined by the user corresponding to the range of the bit rate change. For example, in the case where the low pass filter having the frequency characteristic in which the coding data after the passage of the low pass filter is 64 kbps, is used to the moving picture data in which the bit rate after the coding is 128 kbps, when the input data is 128 kbps, the moving picture data in which the fine bit rate change is possible in the range between 128 kbps and about 64 kbps, can be produced. Further, the calculation cost which accompanies the bit rate change is low, and thereby, a plurality of moving picture data whose bit rates are different, can be quickly produced.

Further, because the difference of the image quality in the rate correction data and the normal data are small as compared to the case where the image data is produced by changing the quantization value as in Embodiments 1, 2 and 3, the present embodiment is characterized in that the motion compensation error caused by selecting the rate correction data is small.

As described above, in the present embodiment, to the whole areas in the frame, the moving picture data structure having together the rate correction data which is produced by removing the high frequency and being coded, and the moving picture coding apparatus by which the rate correction data is selected corresponding to the objective bit rate, and the rate control is conducted, are provided, thereby, because, while the motion compensation error is reduced, the fine rate control can be quickly conducted, a plurality of moving picture data whose bit rates are different, can be quickly produced, and its practical effect is large.

### (Embodiment 5)

In the fifth embodiment, in the apparatus by which the rate control is conducted from the previously coded moving picture data, without decoding the data, and the moving picture data is newly produced, the apparatus characterized in that the input moving picture data has the data structure in which the bit reduction is possible at the time of rate control, will be described below. The present apparatus is structured by 2 apparatus of the moving picture data producing apparatus in which the moving picture data is previously coded, and the moving picture coding apparatus in which the rate control is conducted, and the moving picture data is produced.

Initially, the moving picture data producing apparatus by which the moving picture data having the structure in which the bit reduction is possible at the time of rate control, is produced, will be described, and next, the moving picture coding apparatus by which the rate control is conducted and the moving picture data is produced, will be described.

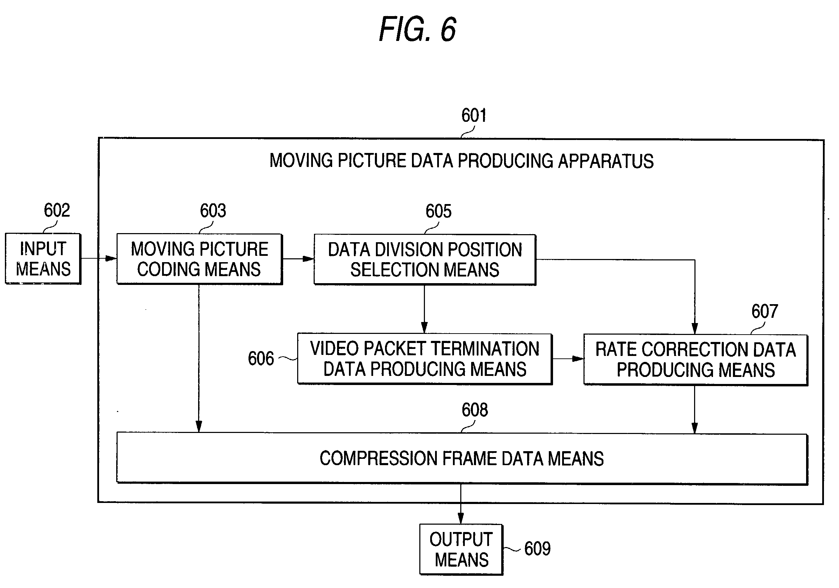

In Fig. 6, the structure of the moving picture data producing apparatus is shown. In Fig. 6, a moving picture data producing apparatus 601 is provided with: a moving picture coding means 603 connected to an input means 602; a data dividing position selection means 605 for selecting the dividable position in the data of the Video Packet structured by continuous arbitrary number of macro blocks; video Packet termination data producing means 606; and rate correction data producing means 607 for storing the information for the rate correction, and is provided with moving picture data combination means 608 connected to the Video Packet producing means 604 and rate correction data producing means 607, and has the structure in which these are connected to an output means 609.

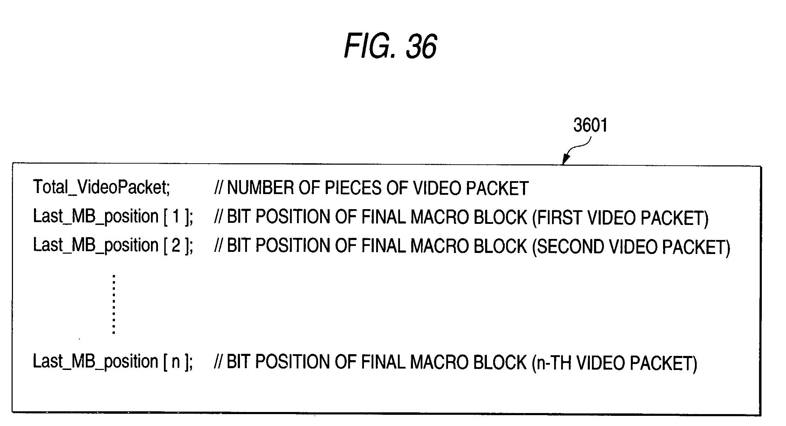

The operation of the moving picture data producing apparatus 601 structured as above will be described below. Initially, the input means 602 inputs the non-compression image into the moving picture coding means 603 for each 1 frame. Then, the moving picture coding means 603 conducts the motion compensation, DCT conversion, quantization, and variable length coding processing on the inputted frame in the Video Packet unit structured by the continuous arbitrary macro block. Further, the moving picture coding means 603 stores respective start positions of the final macro block for each Video Packet at the time of the coding, and produces the Video Packet structure data. The Video Packet structure data is shown in Fig. 36. In Fig. 36, the Video Packet structure data records the total number of the Video Packet, and the start position of the final macro block in respective Video Packets.

Then, the moving picture coding means 603 outputs the coded Video Packet to the data dividing position selection means 605 and the moving data combination means 608, and outputs the Video Packet structure data to the data dividing position selection means 605. Herein, the Video Packet may have the same structure as in the area shown in, for example, Fig. 10, but, it is necessary that each Video Packet is structured by the continuous macro blocks in the lateral direction.

The data dividing position selection means 605 selects the area which can be deleted at the time of rate control for the respective final macro blocks of the inputted Video Packet, and determines its border as the dividing position of the Video Packet. In each Video Packet, the continuous macro block is accommodated in order, and in each macro block, because the variable length sign of the quantized DCT coefficient is accommodated in order from the low frequency side, in the final macro block of the Video Packet, the variable length sign of the rear side corresponds to the DCT coefficient of the high frequency. Accordingly, as shown in Fig. 23, the final macro block of the Video Packet is divided at the time of rate control, and the position to delete the subsequent data is selected from the rear side of the final macro block of each Video Packet. That is, the data dividing position selection means 605 causes the DCT coefficient of the high frequency accommodated in rear side of the final macro block of the Video Packet to be the area which can be deleted. Further, because the high frequency component is smaller, as compared to the low frequency component, in the influence onto the image quality even when the information is deleted, the deterioration of the image quality by deleting the high frequency component is small. Then, the data dividing position selection means 605 outputs the information of the selected position, and its bit amount and the subsequent to the rate correction data producing means 607, and outputs the information of the selected position and each Video packet to the Video Packet termination data producing means 606.

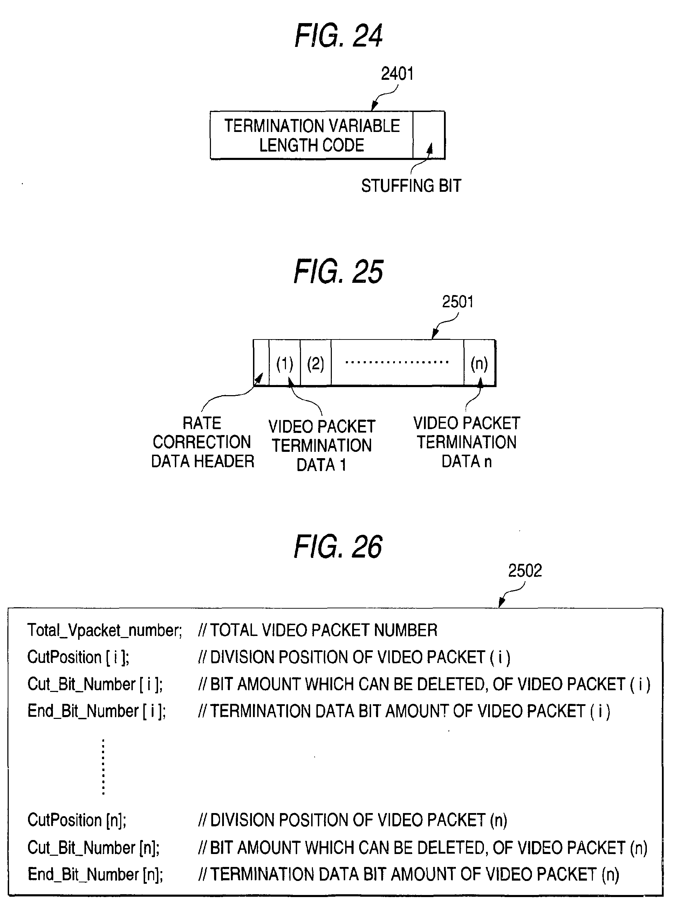

The Video Packet termination data producing means 606 calculates, to the first variable length sign beginning from the position selected by the data dividing position selection means 605, the variable length sign when the sign is the last of the Video Packet, and further, as shown in Fig. 24, produces the Video Packet termination data to which the stuffing bit for byte alignment when it is the last of the Video Packet, is added, and outputs it to the rate correction data producing means 607. Herein, the Video Packet termination data itself is also added by the stuffing bit for adjusting the byte alignment. Then, the rate correction data producing means 607 collects the divided position inputted by the data dividing position selection means 605, the bit amounts subsequent to the position, the Video Packet termination data inputted by the Video Packet termination data producing means 606, as the rate correction data, and output it to the compression frame data combination means 608. Fig. 25 is a view showing the rate correction data structure and rate correction data header structure in the present fifth embodiment. Further, Fig. 26 is a view showing the data content of the rate correction data shown in Fig. 25. The rate correction data has the structure, as shown in Fig. 25 and Fig. 26, consisting of the rate correction data header, and a plurality of Video Packet termination data, and the rate correction data header has the structure including the Video Packet number of 1 frame, bit number showing the divided position of each Video packet, bit amounts which can be deleted, subsequent to the divided position, and bit amount of the Video Packet termination data.

Finally, the moving picture data combination means 608 combines the normal Video Packet inputted by the Video Packet producing means 604 for each 1 frame, and the rate correction data inputted by the rate correction data producing means 607 for each 1 frame, in order, and produces the moving picture data, and outputs it to the output means 609.

Next, the moving picture coding apparatus which conducts the rate control and produces the moving picture data from the moving picture data produced by the moving picture data producing means, will be described.

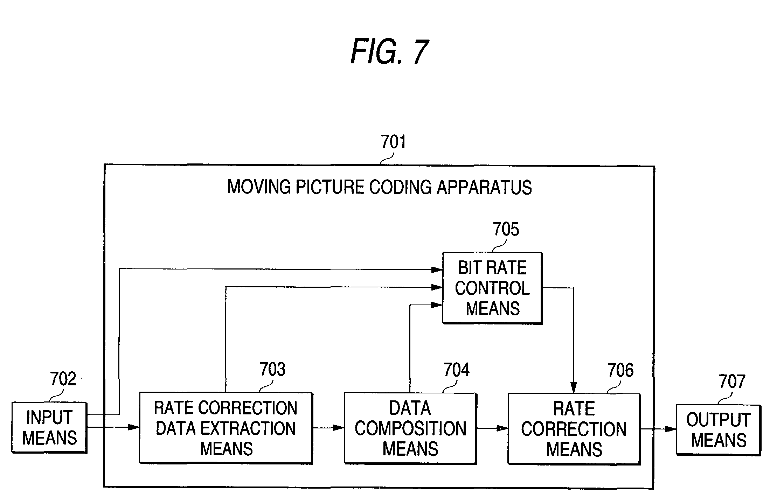

The structure of the moving picture coding apparatus is shown in Fig. 7. In Fig. 7, the moving picture producing apparatus 701 has a rate correction data extraction means 703 connected to an input means 702, data composition means 704, and rate correction means 706, and a bit rate control means 705 connected to the input means 702, rate correction data extraction means 703, and data composition means 704, and has the structure connected to an output means 707. The operation of the structured as described above, will be described below. The moving picture producing apparatus 701 has the moving picture data outputted by the output means 609 as an input, and conducts the rate change and newly produces the moving picture data.

The input means 702 inputs the coded moving picture data including the Video Packet for each 1 frame to the rate correction data extraction means 703, and the objective bit rate into the bit rate control means 705. The rate correction data extraction means 703 extracts the rate correction data from the inputted moving picture data, outputs it to the bit rate control means 706, and outputs the normal Video Packet other than the rate correction data to the data composition means 704. The data composition means 704 combines the inputted Video Packets and composes the frame data, and outputs the generated bit amount to the bit rate control means 705, and outputs the composite frame data to the rate correction means 706. Further, the bit rte control means 705 compares the objective bit rate inputted from the input means 702 to the generated bit amount inputted from the data composition means 704, and calculates the bit rate error, and to satisfy the objective bit rate, when the bit amount is excessive, refers to the rate correction data header in the rate correction data inputted from the rate correction data extraction means 703, and selects from which position Video Packet the bit is deleted, and outputs the correction data corresponding to the rate correction data header showing the position, to the rate correction means 706. Herein, the selection method of the Video Packet to delete the bit, is as follows: the Video Packet is selected in the order of the Video Packet in which the bit amount to be deleted in the rate correction data header is larger, and the bit is deleted, and the bit amount which can be deleted, is the differentiated from the bit rate error, and by adding the bit amount of the termination data, the bit rate error is renewed, and the selection processing is continued until the objective bit rate is satisfied.

The rate correction means 706 deletes the bits subsequent to the bit position which can be deleted, accommodated in the rate correction data header, for the Video Packet inputted by the bit rate control means 705, and the Video Packet termination data inputted by the rate control means 706 is inserted instead of them, and the frame data which is rate corrected, is outputted to the output means 707. The output means 707 composes the moving picture data inputted for each 1 frame from the rate correction means 706, and produces the moving picture data.

As described above, to delete the rear portion bit of the final macro block of the Video Packet so that rate correction is conducted, is equivalent to that the high frequency component of the final macro block of the Video Packet is removed, and has the same effect as a case that the variable length decoding and re-quantization are conducted, and the bit rate is lowered. Further, because the decoding processing is not necessary, the processing is light and the rate control can be quickly conducted.

Further, the number of the rate correction data is equal to the number of the Video Packet, and the number of the Video Packet can be set by the user corresponding to the range of the bit rate change. For example, in the case where the size of 1 Video Packet is several % of the whole frame, which is small, and the data amount of the rear portion bit which can be deleted, corresponds to about 10 % to the data amount of 1 Video Packet, when the input data is about 64 kbps, the data in which the bit rate can be changed in the range of about 64 kbps to about 56 kbps, can be produced. Thereby, in order to cope with the fluctuation of the network, the bit rate change can be quickly conducted. Further, the present embodiment is characterized in that the rate correction data may be smaller, as compared to Embodiments 1 to 4.

As described above, in the present embodiment, the Video Packet structure whose rear portion bit can be deleted, the moving picture data structure having the rate correction data in which the position information and termination data are stored, and the moving picture coding apparatus which refers to the rate correction data and deletes the bits of rear portion of the Video Packet and conducts the rate control, are provided, thereby, the rate control can be quickly conducted without decoding the moving picture data, and its practical effect is large.

### (Embodiment 6)

In the sixth embodiment, in the moving picture coding apparatus in which the rate control is conducted from the previously coded moving picture data without decoding the data and the moving picture data is newly produced, the moving picture coding apparatus characterized in that the input moving picture data has, as the rate correction data, the structure having the I frame which is the coded image in the frame whose bit amount is different to the normal frame, will be described below. Initially, the moving picture data producing apparatus in which the moving picture data which is an input of the moving picture coding apparatus, is produced, will be described, and next, the moving picture coding apparatus by which from the moving picture data coded by the moving picture data producing apparatus, the rate control is conducted without decoding the data, and the moving picture data is newly produced, will be described below.

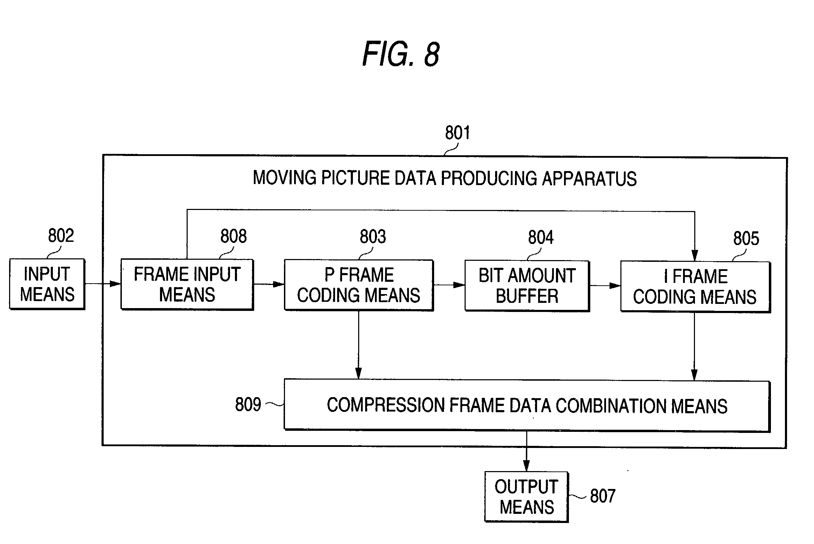

In Fig. 8, the structure of the moving picture dataproducing apparatus to produce the input moving picture data of the moving picture coding apparatus is shown. The moving picture data producing apparatus 801 is provided with a frame input means 808 connected to the input means 802, P frame coding means 803, and bit amount buffer 804, and is provided with a frame input means 808, and I frame coding means 805 connected to the bit amount buffer 804, and further, is provided with a compression frame data combination means 809 connected to the P frame coding means 803 and I frame coding means 805, and a moving picture data combination means 806, and has the structure connected to an out put means 807.

The operation of the moving picture data producing means structured as described above will be described below. The frame input means 808 inputs the non-compression image into the P frame coding means 803 and I frame coding means 805 for each 1 frame. The P frame coding means conducts the P frame coding through the motion compensation, DCT conversion, quantization, and variable length coding processing, and outputs the coded frame to the compression frame data combination means 809, and outputs the bit amount of the coded frame to the bit amount buffer 804. The bit amount buffer 804 outputs the inputted bit amount to the I frame coding means 805.

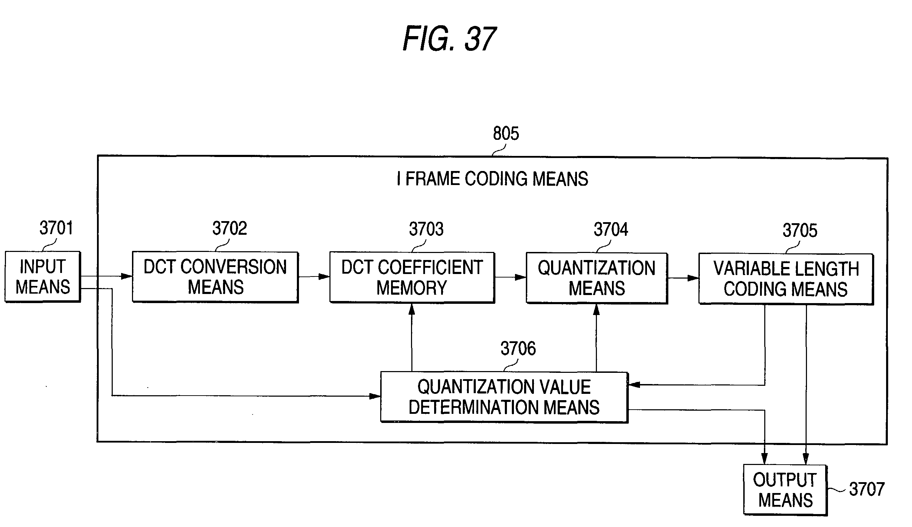

Then, the I frame coding means 805 conducts the I frame coding through the DCT conversion, quantization, and variable length coding processing, on the frame inputted from the input means 802, and outputs the coded frame to the compression frame data combination means 809. Herein, the detailed structure of the I frame coding means 805 is shown in Fig. 37. In Fig. 37, the I frame coding means is connected to an input means 3701, and is structured by a DCT conversion means 3702, DCT coefficient memory 3703, quantization means 3704, variable length coding means 3705, and quantization value determination means 3706, and is connected to an output means 3707. In Fig. 37, the input means 3701 corresponds to the output of the frame input means 808 in Fig. 8, and the output of the bit amount buffer 804, and inputs the non-compression frame into the DCT conversion means 3702, and inputs the bit amount into the quantization value determination means 3706. The DCT conversion means 3702 DCT-converts the inputted non-compression data, and outputs it a DCT coefficient memory 3703. The DCT coefficient memory 3703 stores the inputted DCT coefficient in the internal memory, and inputs the DCT coefficient into a quantization means 3704. Further, when the DCT coefficient signal is inputted from the quantization value determination means 3706, the DCT coefficient stored in the internal memory is outputted to the quantization means 3704. The quantization means 3704 conducts the quantization by using the DCT coefficient inputted from the quantizatio coefficient memory, and the quantization value inputted from the quantization value determination means, and outputs it to the variable length coding means 3705. The variable length coding means 3705 conducts the variable length coding on the inputted data, and outputs the variable length coding data and its bit amount to the output means 3707, and the outputs the bit amount to the quantization value determination means 3706.

The quantization value determination means 3706 stores the bit amount inputted from the input means 3701 in the internal memory, and outputs the previously determined quantization value to the quantization means 3704. Further, when the bit amount is inputted from the variable length coding means 3705, it is compared to the bit amount stored in the internal memory, and the next quantization value is determined so that the bit amount becomes small, and the quantization value is outputted to the quantization means 3704, and the DCT coefficient output signal is outputted to the DCT coefficient memory 3703. Further, by using the bit amount inputted from the variable length coding means 3705, the internal memory is renewed.

After the above processings are repeated by the number of times of pieces of the rate correction data which is previously determined by the user, the quantization value determination means 3706 outputs the I frame coding end signal to the output means 3707.

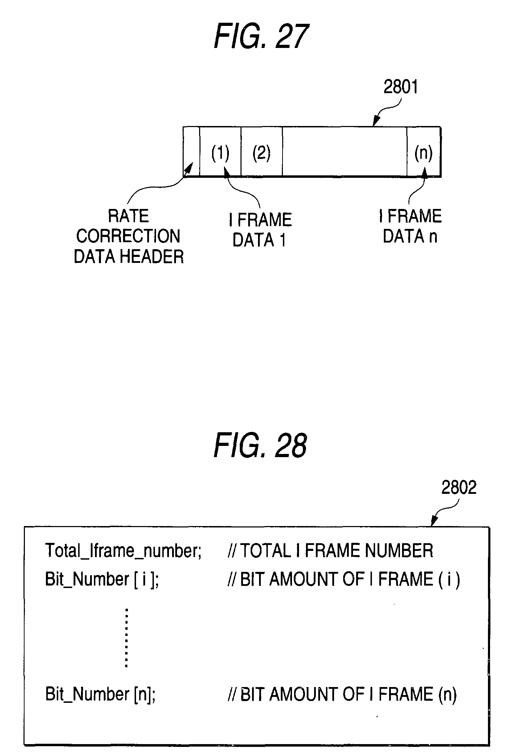

As described above, the I frame coding means 805 produces a plurality of I frames whose bit amount is different from the inputted bit amount, and outputs the produced I frame and its bit amount to the compression frame data combination means. Finally, the compression frame data combination means 809 combines the P frame data inputted from the P frame coding means 803, and the rate correction data produced from a plurality of I frame data and their bit amounts inputted from the I frame coding means 805, in order, and outputs it to the output means 807. Fig. 27 is a view showing the rate correction data structure and the rate correction data header structure in the present sixth embodiment. Further, Fig. 28 is a view showing the data content of the rate correction data shown in Fig. 27. The rate correction data is, as shown in Fig. 27 and Fig. 28, structured by the rate correction data header and a plurality of I frames. The rate correction data header has the structure in which the number of I frames and respective bit amounts are accommodated in the fixed length.

Next, the structure of the moving picture coding apparatus in which the moving picture data coded by the moving picture data producing apparatus 801 is an input, and the rate control is conducted without coding, and the moving picture data is newly produced, is shown in Fig. 9. The moving picture coding apparatus 901 has the structure which is provided with a rate correction data extraction means connected to an input means 902 and a bit rate control means 905 connected to the input means 902 and the rate correction data extraction means, and further, a rate correction means 906 connected to a bit rate control means 905, and the rate correction data extraction means 903, and is connected to an output means 907.

The operation of the moving picture coding apparatus structured as described above, will be described below. The input means 902 inputs the moving picture data coded by the moving picture data producing means 801 for each 1 frame, into the rate correction data extraction means 903, and inputs the objective bit rate into the bit rate control means 905. The rate correction data extraction means 903 extracts the rate correction data from the inputted data and outputs it to the bit rate control means 905, and outputs the normal P frame data other than the rate correction data to the rate correction means 906, and outputs the bit amount of the P frame to the bit rate control means 905.

Then, the bit rate control means 905 compares the objective bit rate inputted from the input means 902, to the bit amount inputted from the rate correction data extraction means 903, and when the bit rate is satisfied, and the frame which is preceding 1 frame is not frame-skipped, the control signal in which the rate correction is not necessary, is outputted to the rate correction means 906. In contrast to that, when the bit rate is not satisfied, or the frame which is preceding 1 frame is frame-skipped, the rate correction data header is referred to, and from I frames in the rate correction data, the I frame which satisfies the objective bit rate is selected, and the selected I frame is outputted to the rate correction means 706. Further, even when the rate correction data is used, when the bit amount is excessive, the frame skip control signal is outputted to the rate correction means 906, and the information whether the frame skip control signal is emitted, is stored in the internal memory.

Further, when the control signal of the rate correction unnecessary is inputted from the bit rate control means 905, the rate correction means 906 outputs the frame inputted from the rate correction data extraction means 903 as it is, to the output means 907, and when the I frame is inputted from the bit rate control means 905, the I frame is outputted to the output means 907, and when the frame skip control signal is inputted from the bit rate control means 905, the frame skip control signal is outputted to the output means 907. Finally, the output means 907 collects the frame data inputted from the rate correction means 906 for each 1 frame, and frame skip control signal, and the moving picture data is produced. In this connection, when the frame skip control signal is inputted, the frame is skipped.

In the present embodiment, because the input moving picture data has the I frame as the rate correction data, even when the frame skip is conducted at the time of rate control, by using the I frame for the next frame, the generation of the motion compensation error can be prevented.

Further, the number of pieces of the I frame which is the rate correction data, and the quantization value when the rate correction data is produced, can be set by the user corresponding to the range of the bit rate change. Foe example, when the quantization of the normal frame data is conducted at the quantization value Q = 2, and the bit rate is about 1.6 Mbps, the quantization is conducted by using 2 quantization values of Q = 6, Q = 29, as the rate correction data, and the data of about 384 kbps and about 64 kbps are produced. Then, by using together the rate correction data or frame skip, the moving picture data in which the arbitrary bit rate change of range from about 1.6 Mbps to about 64 kbps is possible, can be produced.

As described above, in the present embodiment, when the moving picture data producing apparatus has a means for producing the I frame whose bit amount is different, as the rate correction data, and the moving picture coding apparatus is provided with, as the rate correction data, a means for selecting the I frame and conducting the rate control, the rate control can be quickly conducted without decoding the input moving picture data, and further, the generation of the motion compensation error when the frame-skip is conducted, can be prevented, and a plurality of movingpicture data whose bit rates are different can be quickly produced, and its practical effect is large.

### (Embodiment 7)

In the seventh embodiment, in an apparatus by which the rate control is conduced from the previously coded moving picture data without decoding the data, and the moving picture data is newly produced, a moving picture coding apparatus characterized in that a portion of the area in the frame of the moving picture data is quarried out, and the frame size is different from the input moving picture data, and the moving picture data whose size is the quarried out frame size, is produced, will be described below. When the size is quarried out from the frame size of the input image data and the moving picture data is produced, because the bit rate is not uniform, the bit is not regulated depending on the quarried out portion, and in order to quarry out, it is necessary that the bit rate is changed.

Initially, the moving picture data producing apparatus by which the moving picture data which is an input of the moving picture coding apparatus is produced, will be described, and next, the moving picture coding apparatus by which the rate control is conducted from the previously coded moving picture data without decoding the data, and the moving picture data is newly produced, will be described below.

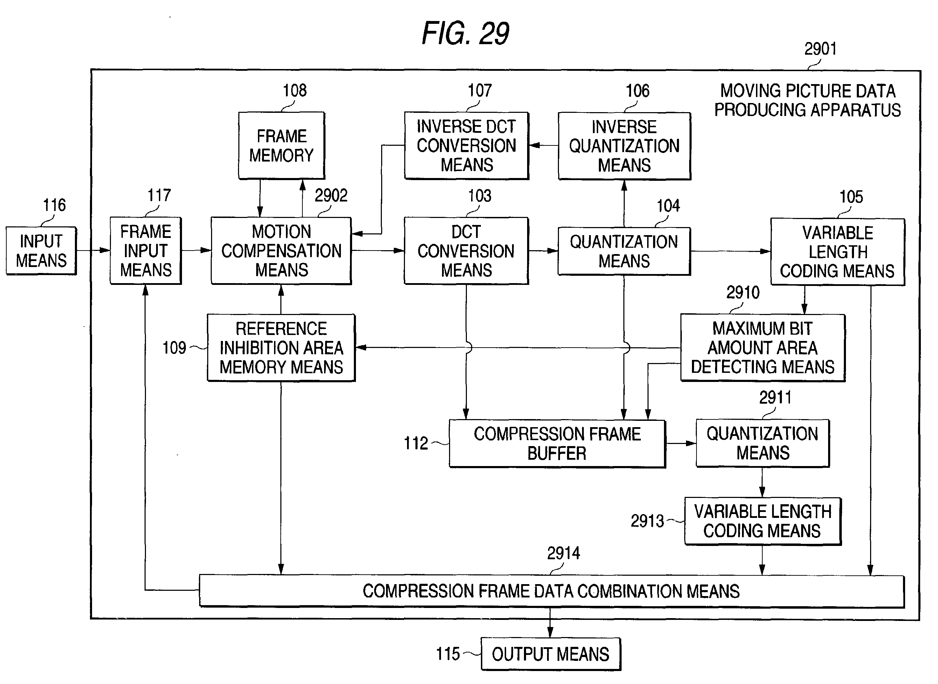

In Fig. 29, the structure of the moving picture data producing apparatus to produce the input moving picture data of the moving picture coding apparatus is shown. In Fig. 29, a moving picture data producing apparatus 2901 is provided with: a frame input means 117 connected to an input means 116; motion compensation means 2902; DCT conversion means 103; quantization means 104; variable length coding means 105; inverse quantization means 106 to conduct the decoding; inverse DCT conversion means 107; and frame memory 108 to store the decoded frame, and is provided with: a maximum bit amount area detecting means 2910 to detect the area having the maximum bit amount, connected to the variable length coding means 105; reference inhibition area memory means 109; compression frame buffer 112 connected to the DCT conversion means 103; quantization means 2911 to conduct the quantization, connected to the compression frame buffer 112; and variable length coding means 2913, and is provided with: a compression frame data combination means 2914 to combine the moving picture data, connected to the variable length coding means 105, reference inhibition area memory means 109, and variable length coding means 2913, and has the structure connected to the output means 115. The operation of the moving picture data producing apparatus structured as described above will be described below. In Fig. 29, operations of the motion compensation means 2902, maximum bit amount area detecting means 2910, quantizationmeans 2911, variable length coding means 2913, and the operation of the blocks other than compression frame data combination means 2914 are entirely the same as in the Embodiment 1.

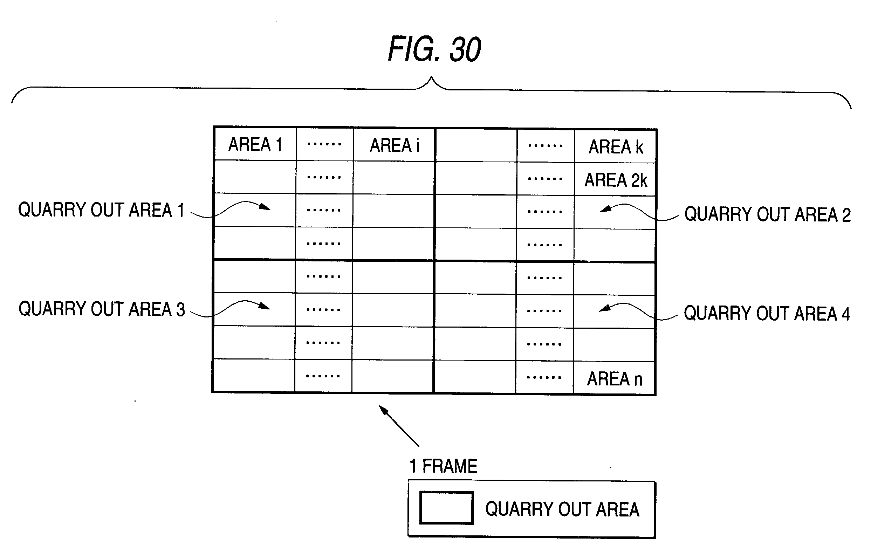

An example of the quarry out area is shown in Fig. 30. In Fig. 30, 1 frame is divided into 4 quarry out areas surrounded by a bold line. The moving picture data produced by the moving picture data producing means in the present embodiment is different form the input frame size, and has the structure in which, for example, the moving picture data can be produced by the moving picture coding apparatus, which will be described later, as the frame size of an arbitrary quarry out area shown in Fig. 30.

In the Embodiment 1, the maximum bit amount area detecting means 110 selects a plurality of areas in the order from the range including the maximum bit amount in the plurality of areas in 1 frame shown in Fig. 10, and to the selected area, by changing the quantization value by the quantization means 111, the rate correction data whose bit amount is different is produced.

In contrast to that, in the present embodiment, the maximum bit amount area detecting means 2910 selects , for example, as shown in Fig. 30, to 1 frame which is divided into a plurality of quarry out areas (rectangular area shown by a bold line), a plurality of areas in the order from the area in which the bit amount is maximum in each quarry out area, and outputs the selected each area to the reference inhibition area memory means 109, and the compression frame buffer 112. In this connection, the quarried out area shown in Fig. 30 is an example, and the quarry out area can be arbitrarily determined. Further, the motion compensation means 2902 conducts the motion compensation by inhibiting the motion estimation to the reference inhibition area shown in the rate correction data 31 inputted from the reference inhibition area memory means and the quarry out area of the position which is different from the currently coded quarry area. For example, when the motion compensation is conducted on the quarry out area 1, the motion estimation is conducted only from the area excepting for the reference inhibition area in the quarry out area 1, in one preceding frame to the frame into which the input is conducted from the frame memory 108. Tentatively, when the motion estimation is conducted to the outside of the quarry area, because there is no reference image to be used for the motion compensation when the area is quarried from the inside of one frame and the moving picture data is produced, the decoding can not be conducted. As described above, by providing the limitation for the motion estimation, the decoding of the coded moving picture data can be conducted by using not only the whole frame, but also only each quarry area, and the moving picture data can be structured by quarrying out a portion from the frame of the coded moving picture data.

The quantization means 2911 changes the quantization value and conducts the quantization by using the DCT coefficient and quantization value of each area selected by the reference inhibition area shown in the rate correction area data inputted from the compression frame buffer 112, that is, selected by the maximum bit amount area detecting means 2910, and produces the data whose bit amount is different, and respectively outputs to the variable length coding means 2913.

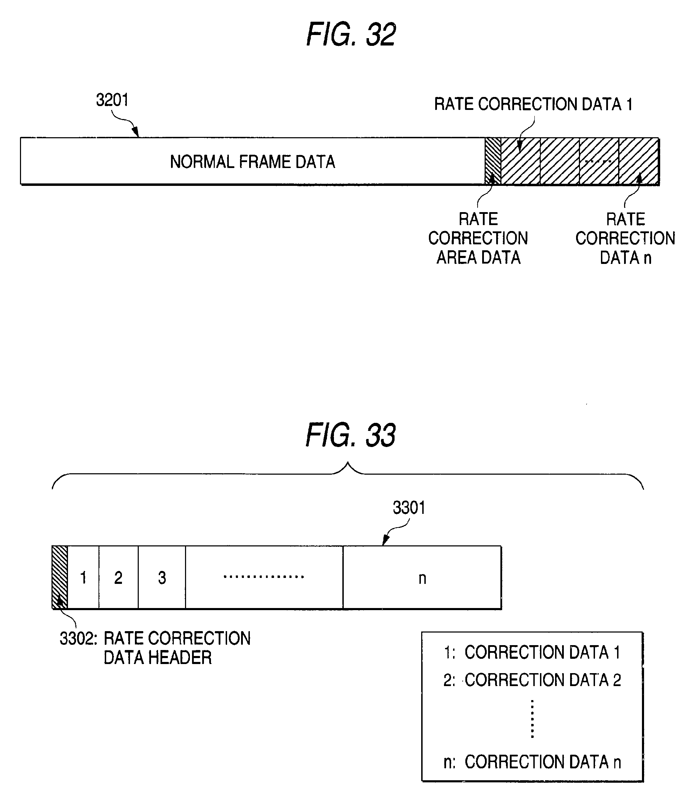

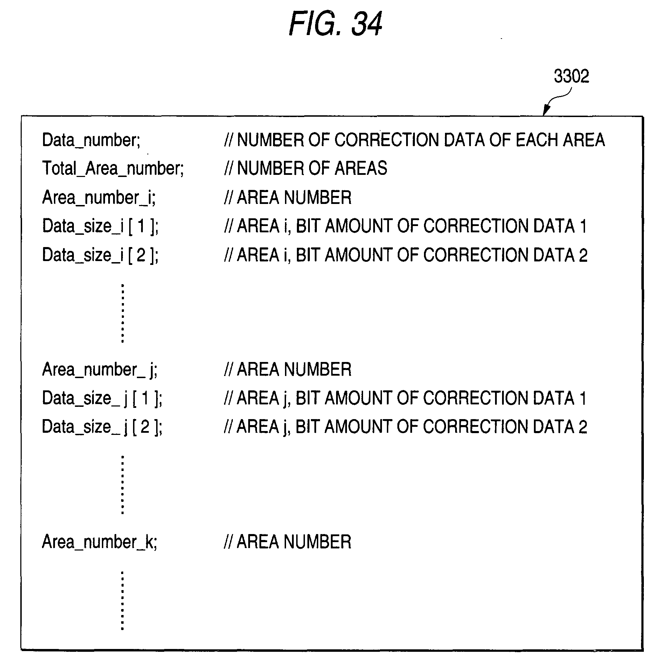

The variable length coding means 2913 conducts the variable length coding on the DCT coefficient whose bit amount is different, of each reference inhibition area inputted by the quantization means 2911, and produces the rate correction data having respective data sizes and area numbers as the header information, and outputs it to the compression frame data combination means 114. Herein, the data produced by the variable length coding means 2913 is called the rate correction data. In Fig. 33, the structure of the rate correction data is shown. In Fig. 33, the rate correction data header 3302, as shown in Fig. 34, has the structure in which the number of the correction data in each area, the area number in the frame, and the bit amounts of respective correction data, are accommodated as the fixed length data. Then, the rate correction data has the structure in which the correction data is accommodated in order succeeding to the rate correction data header 3302.

The compression frame data combination means 2914 links in order the normal frame data inputted by the variable length coding means 105, the rate correction area data inputted by the reference inhibition area memory means 109, and the rate correction data inputted by the variable length coding means 2913 as shown in Fig. 32, and produces the compression frame data, and outputs it to the output means 115.

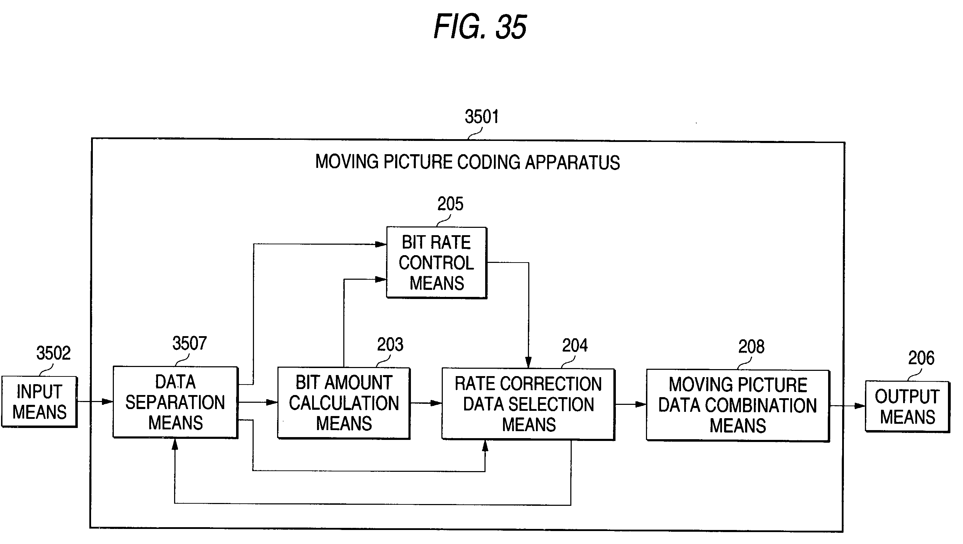

Next, in Fig. 35, the structure of the moving picture coding apparatus by which a portion in the frame is quarried from the moving picture data coded by the moving picture coding apparatus in Fig. 29 without being coded, and the bit rate adjustment following the quarrying out is conducted, and the moving picture data is newly produced, is shown.

In Fig. 35, the moving picture coding apparatus 3501 has the structure which is provided with: a data separation means 3507 connected to an input means 3502; bit amount calculation means 2303; rate correction data selection means 2404; thee bit rate control means 205; and moving picture data combination means 208, and which is connected to the output means 206. The operation of the moving picture coding apparatus structure as described above will be described below. In Fig. 35, the operations of blocks other than the input means 3502 and data separation means 3507, are entirely the same as in Embodiment 1.

The input means 3502 inputs the moving picture data which is compression coded by the moving picture data producing means 2901, objective bit rate, quarry area information showing the quarry out method of 1 frame as shown in Fig. 30, and quarry out area number showing which portion of the input data is to be quarried out, to the data separation means 207. When the data is inputted into the data separation means 3507 by the input means 3502, the objective bit rate is inputted into the bit rate control means 205 for each 1 frame, and the data is taken out in order from the leading end of the inputted moving picture data, the quarrying out and composition is conducted on the normal frame data corresponding to the quarry out area number, and it is inputted into the bit amount calculation means 203 for each 1 frame, and the rate correction data corresponding to the rate correction area data and the quarry out area number is inputted into the rate correction data selection means 204.

Generally, in the case where, to the previously coded image data, a portion of the frame is quarried out and the new moving picture data whose frame size is different, is produced, when the motion estimation is conducted from the area other than the area in which the previously coded image data is quarried out, the problem in which it can not be decoded, is generated. That is for the reason why the necessary reference data to decode the quarried out area does not exist inside the quarried out area. That is, because the necessary reference data exists outside the quarried out area, it is impossible that the quarrying out is simply conducted, and in order to quarry out a portion of the frame and produce the new moving picture data whose frame size is different, it is necessary that, after whole frame is decoded once, the inside of the quarry out area is coded again, and there is a problem that the processing load is large.

In contrast to that, in the present embodiment, when the data separation means 3507 quarries out the data of the area shown by the quarry out area number from the normal frame data, and composes the new frame whose frame size is different, because the motion estimation of the quarried area is conducted only in the same area, there is no case that the motion compensation error is generated by the quarrying out, and it can not be decoded. Accordingly, it can be quarried out and composed without decoding the data. Further, also the change of bit rate following the quarrying out, can be conducted without decoding the data by selecting the rate correction data by adjusting to the objective bit rate in the same manner as in Example 1.

Further, the number of areas having the rate correction data and the rate correction data of each area can be set by the user corresponding to the range of the bit rate change, and has the same effect as in Embodiment 1, however, the rate correction data necessary only for conducting the bit rate adjustment following the quarrying out may be small. For example, when the quarry out areas are 4 and the quantization value of the normal frame data Q = 8, and the bit rate is about 256 kbps, as the rate correction data, at least one area in which the bit amount is large is selected in respective quarry out areas, and when the rate correction data of about 96 kbps (as the whole frame) in which the quantization is conducted by using the quantization value Q = 20, is produced, it is sufficiently enough for adjustment of the bit rate generated following the quarry out. That is, when the quarry out areas is 4, and the bit rate is about 256 kbps, it is necessary that the bit rate of the frame quarried out by the quarry out of the area is 1/4 of the whole, that is, about 64 kbps, however, in practice, by the deviation of the bit amount, the area over 64 kbps exists. In the present embodiment, the rate correction data is produced, and by using the rate correction data at the time of quarry out of the area, the bit rate of such the area can be adjusted.

As described above, in the present embodiment, the moving picture data structure having the area having the rate correction data in which the bit amount is different for each quarry area, a means by which the area of a portion in the frame is quarried out and composed, and an area selection means for selecting the rate correction data corresponding to the bit rate, are provided, thereby, a portion of the frame is quickly quarried out without decoding the moving picture data, and without generating the deterioration of image quality, and further, the bit rate adjustment can be conducted and the new moving picture data whose frame size is different, can be produced, and its practical effect is large.

Further, in the present embodiment, when a point that the area having the reference inhibition area and rate correction data is produced in 1 frame, is changed to that it is produced for each quarry out area, and following that, also for the motion compensation, the motion estimation is not conducted from the outside of the quarry out area, it is shown that the effect in which, not only by conducting the rate control without decoding the coded moving picture data, but also by quarrying out a portion in the frame without decoding the data, the moving picture data whose frame size is different can be produced, can be obtained, and for Embodiment 2 to Embodiment 6, by conducting the same change, a portion in the frame is quarried out, and the moving picture data can be produced.

Further, in Embodiments 1 to 7, it is described that the moving picture data producing apparatus accommodates the rate correction data after the normal frame date, however, the position to be accommodated, is not limited to this. For example, when the moving picture data producing apparatus accommodates the rate correction data after the user data start sign in the moving picture data, the data can be reproduced by using the normal moving picture decoding apparatus.

Herein, the user data start sign is, for example, as shown in ISO/IEC 11172-2 which is the standard book of MPEG coding, a sign showing the start of the area which is prepared for the future expansion, and the normal moving picture decoding apparatus skips over the data from the user data start sign to the next start sign and conducts the decoding. Accordingly, the moving picture data produced by the moving picture data producing apparatus in Embodiments 1 to 7, can be reproduced by using the normal moving picture decoding apparatus.

Further, in the present invention, the input data of the moving picture coding apparatus and output data are compared with each other, or a plurality of output data whose bit rates are different, are compared, and when bit arrangement is locally different, it is structured in such a manner that the bit arrangement is accommodated in the user data, or a position other than the normal frame data.

Further, when the monochrome frame is an input, each frame of the moving picture data outputted by the moving picture data producing apparatus has the periodic structure in which, other than normal frame data, as the rate correction data, the entirely same data are periodically included by the number of areas between the areas, and because the entirely the same rate correction data is also included between the frames, the moving picture data has the periodic structure.

As described above, firstly, when the moving picture data has the structure having the rate correction data whose bit amount is different, to the area in which the bit amount in the P frame (predictive coding image between frames) is large, in the case where the moving picture data is newly produced from the previously coded moving picture data, by selecting the data whose bit amount is different, corresponding to the objective bit rate, the bit rate can be changed without decoding the moving picture data, and the moving picture data can be quickly produced.

Secondly, in the case where the moving picture data has the rate correction data in which the bit amount is different, and the rate change can be conducted, on the predetermined area in which the probability referred to at the time of the motion estimation from the next frame is low in the P frame (predictive coding image between frames), and the moving picture data is newly produced from the previously coded moving picture data, by selecting one data from rate correction data whose bit amount is different, in the input moving picture data, corresponding to the objective bit rate, the bit rate can be changed without decoding the moving picture data, and the moving picture data can be quickly produced. Further, by producing the rate correction data in the area in which the probability referred to from the next frame is low, the lowering of the predictive coding efficiency due to the influence of the search area limitation of the motion estimation, can be reduced.

Thirdly, in the moving picture data producing apparatus, by providing the motion compensation means for inhibiting the reference, at the time of the motion estimation of the next frame, to the area having the rate correction data in the P frame of the moving picture data to conduct the coding, when the moving picture data is newly produced from the coded moving picture data, even by selecting the rate correction data whose bit amount is different, corresponding to the objective bit rate, the generation of the motion compensation error due to the change of the data can be prevented.

Fourthly, in the moving picture data producing apparatus, when the P frame of the moving picture data is produced, to the area in which the referred degree data showing the area in the preceding frame used for reference at the time of motion estimation is recorded, and by using the referred area data, which is selected as the area that the referred degree is low, by providing the means for producing the rate correction data whose bit amount is different, the moving picture coding can be conducted without lowering the coding efficiency of the predictive coding between frames. Further, when the moving picture data is newly produced from the previously coded moving picture data, by selecting the data whose bit amount is different, corresponding to the objective bit rate, the bit rate can be quickly changed without decoding the data, and the moving picture data can be produced.

Fifthly, in the moving picture data producing apparatus, by providing the means for producing the data in which the predictive coding between frames is conducted on the original image to the P frame of the moving picture data, and the means by which the high frequency component of the original image is removed, and by conducting the predictive coding between frames, the rate correction data whose bit amount is different, is produced, when the moving picture data is newly produced without decoding the coded moving picture data, by selecting a plurality of areas in the rate correction data, in which the high frequency component is removed and coded, and bit amounts are different, the fine bit rate control can be quickly conducted.

Sixthly, in the moving picture data producing apparatus, by providing the means for producing the position at which the subsequent bit can be deleted, and the termination data to each Video Packet of the moving picture data, in the moving picture coding apparatus by which the new moving picture data is produced from the coded moving picture data is produced, by selecting the Video Packet corresponding to the objective bit rate, and by deleting the rear portion bits, the bit rate control can be quickly conducted.

Seventhly, in the moving picture data producing apparatus, in the case where the means for producing a plurality of I frames whose bit amounts are different, as the rate correction data, to the P frame of the moving picture data, is provided, when the moving picture data is newly produced from the previously coded moving picture data, by selecting or frame skipping the rate correction data corresponding to the objective bit rate, the bit rate control can be quickly conducted, and the moving picture data can be produced.

Eighthly, in the case where the structure in which an area having together the rate correction data whose bit amount is different in the P frame (predictive coding image between frames) of the moving picture data is provided at least one for each quarry out area determined in the frame is provided, and the moving picture data producing means is provided with the motion compensation means in which the motion estimation is not conducted from the different quarry out area and the area having the rate correction data, when one portion in the frame is quarried out from the previously coded moving picture data and the moving picture data is newly produced, by selecting the data whose bit amount is different, corresponding to the objective bit rate, the bit rate can be controlled without decoding the moving picture data, and without generating the motion compensation error, and the moving picture data can be quickly produced.

## Claims

1. A moving picture data producing apparatus to which non-compression moving picture data is input, comprising:
quantization means; and
rate correction data producing means for producing rate correction data which is used at a time of bit rate change, whereby moving picture data having the rate correction data other than normal moving picture stream is produced.

2. A moving picture data producing apparatus according to Claim 1, wherein said rate correction data producing means conducts quantization different from said quantization means on an area in which the bit generation amount in each frame of the moving picture data is large, and the rate correction data by which the rate change is possible, is produced.

3. A moving picture data producing apparatus according to Claim 1, wherein said rate correction data producing means, in a P frame of the moving picture data, conducts the quantization different from the quantization means on an area in which the provability referred at the time of the motion estimation time is low, and the rate correction data in which the rate change is possible, is produced.

4. A moving picture data producing apparatus according to anyone of Claims 1 to 3, further comprising means for recording reference inhibition area information which shows an area having the rate correction data in each frame of the moving picture data; and
motion compensation means for conducting motion compensation, wherein, when motion estimation in the next frame is performed, an area shown by the reference inhibition area information shows is inhibited from referring.

5. A moving picture data producing apparatus according to Claim 1, further comprising:
motion compensation means for conducting motion compensation and outputting the referenced area information referred to at the time of the motion estimation; and
wherein said rate correction data producing means uses the referenced area information and selects the area in which the referenced degree is low in the frame, so that the rate correction data by which the rate change is possible with respect to the selected area is produced.

6. A moving picture data producing apparatus according to Claim 1, wherein said rate correction data producing means deletes high frequency components from an original image and conducts the same quantization as said quantization means, and produces the rate correction data by which the rate change is possible.

7. A moving picture data producing apparatus according to Claim 1, wherein said rate correction data producing means decides a position at which rear portion bits can be deleted, with respect to area structured by a continuous arbitrary number of macro-blocks (for example, 16 x 16 pixels), and produces the rate correction data in which the position information is recorded, by which the rate change is possible.

8. A moving picture data producing apparatus according to Claim 1, wherein said rate correction data producing means produces an I frame which is a coding image inside the frame, and produces the rate correction data by which the rate change is possible.

9. A moving picture data producing apparatus to which non-compression moving picture data is input, comprising:
quantization means;
rate correction data producing means for producing the rate correction data which is the data used when the bit rate is changed; and
means for deciding a quarry out area by quarrying out a part of a frame to able to decoding, whereby moving picture data having the rate correction data other than normal moving picture stream is produced.

10. A moving picture data producing apparatus according to Claim 9, wherein the rate correction data producing means produces the rate correction data which the rate change is possible, to at least one of areas in respective quarry out areas in each frame.

11. A moving picture data producing apparatus according to Claim 9, further comprising motion compensation means for conducting a motion compensation, in which it is inhibited to refer an area having the rate correction data in the preceding frame and to a different quarry out area to conduct motion estimation.

12. A moving picture coding apparatus for producing and outputting moving picture data whose bit rate is different from input moving picture data which is previously compression coded, said apparatus comprising:
bit rate correction means by which the bit rate is changed by referring to rate correction data contained in said input moving picture data, whereby the bit rate is changed while the input moving picture data is not decoded.

13. A moving picture coding apparatus according to Claim 12, wherein said bit rate correction means uses the rate correction data whose bit amount is different, included in the inputted moving picture data, and by replacing the previously coded moving picture data, corresponding to the objective bit rate, the bit rate change is conducted.

14. A moving picture coding apparatus according to Claim 12, wherein said bit rate correction means selects an area in which the bit can be deleted, shown in the rate correction data included in the input moving picture data corresponding to the objective bit rate, and by deleting the bit, the bit rate change is conducted.
